(19) Europäisches Patentamt
European Patent Office
Office européen des brevets

(11) **EP 4 475 010 A1**

(12) **EUROPEAN PATENT APPLICATION**
published in accordance with Art. 153(4) EPC

(43) Date of publication:
**11.12.2024 Bulletin 2024/50**

(21) Application number: **22894357.7**

(22) Date of filing: **18.08.2022**

(51) International Patent Classification (IPC):
**G06F 17/15** (2006.01)

(52) Cooperative Patent Classification (CPC):
**G06F 17/15; G06F 17/16; G06N 3/0464;
G06N 3/084;** Y02D 10/00

(86) International application number:
**PCT/CN2022/113318**

(87) International publication number:
**WO 2023/087814 (25.05.2023 Gazette 2023/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2021 CN 202111400054**

(71) Applicant: **Cambricon (Xi'an) Semiconductor Co.,
Ltd.**
**Xi'an City, Shaanxi 710116 (CN)**

(72) Inventor: **ZHENG, Wankai**
**Beijing 100191 (CN)**

(74) Representative: **Huang, Liwei**
**Cäcilienstraße 12**
**40597 Düsseldorf (DE)**

(54) **COMPUTING APPARATUS, METHOD FOR IMPLEMENTING CONVOLUTION OPERATION BY USING COMPUTING APPARATUS, AND RELATED PRODUCT**

(57) Disclosed in the present disclosure are a computing apparatus, a method for implementing a convolution operation by using a computing apparatus, and a related product. The computing apparatus may be comprised in a combined processing apparatus, and the combined processing apparatus may further comprise an interface apparatus and other processing apparatuses. The computing apparatus interacts with the other processing apparatuses to jointly complete a computing operation specified by a user. The combined processing apparatus may further comprise a storage apparatus, which is respectively connected to the computing apparatus and the other processing apparatuses, and is used for storing data of the computing apparatus and the other processing apparatuses. By means of the solution of the present disclosure, a convolution operation is optimized, such that the operation processing efficiency is improved.

FIG. 2

**Description**

## CROSS REFERENCE OF RELATED APPLICATION

The present application claims priority to Chinese Patent Application No. 202111400054.3 with the title of "COMPUTING APPARATUS, METHOD FOR IMPLEMENTING CONVOLUTION OPERATION BY USING COMPUTING APPARATUS, AND RELATED PRODUCT" and filed on November 19, 2021.

## TECHNICAL FIELD

The present disclosure generally relates to a field of data processing. More specifically, the present disclosure relates to a computing apparatus performing a convolution operation, a method for implementing the convolution operation by using the computing apparatus, a chip, and a board card.

## BACKGROUND

At present, deep learning has become an important branch of machine learning, and also vigorously contribute to the development of artificial intelligence (AI). Deep neural network (DNN), the core technology of deep learning, has been widely used in many industries.

Neural network is one of the most critical techniques in the artificial intelligence and deep learning, among which a convolution neural network (CNN) is one of the most important network types. The most critical computation in a convolution neural network is a convolution operation on a Conv (convolutional) layer. The function of the convolutional layer is to extract features from input data. By performing the convolution on a plurality of layers, complex features may be extracted to ensure that the network has powerful expression and generalization abilities. A neural network model contains a large number and various types of convolution operations, and the computational performance of the convolution operations greatly affects the computational performance of the entire neural network model. When the neural network model is applied to different fields, such as speech recognition, machine translation, image processing, and the like, their corresponding input feature maps and the size of each dimension of weights may vary. To take full advantage of the hardware of a deep learning processor, it is necessary to optimize different scales, and/or different types of convolution operations to improve the computational performance of executing the neural network model.

## SUMMARY

To solve at least one or more technical problems as mentioned above, the present disclosure proposes, in various aspects, a computing apparatus which, by collapsing the width dimension of an input feature map, may enable data of various dimensional sizes to be adapted to hardware of the convolution operation, so as to improve the computational efficiency of the convolution operation. The convolution operations of embodiments of the present disclosure may be operations in various neural network models that may be applied to various fields, such as image processing, speech processing, text processing, and the like, where these processes may, for example, include, but are not limited to, identification and classification.

A first aspect of the present disclosure provides a computing apparatus configured to perform a convolution operation. The computing apparatus includes: a storage circuit that stores input feature maps and convolutional kernels, where the convolutional kernels are stored in blocks according to a dimension of an output channel Co to be allocated to different slave processing circuits; a master processing circuit configured to align an input channel Ci of the input feature map to the input channel slicing granularity Pci, form input feature data lines by combining data of each slicing granularity with Ws multiples of data in a width dimension, and broadcast the input feature data lines to a plurality of slave processing circuits to perform the convolution operation, where Pci*Ws=M, and M is the amount of data processed by hardware in a single operation; and a plurality of slave processing circuits configured to perform convolution operations on the broadcasted input feature maps and corresponding convolutional kernels allocated to the slave processing circuits, respectively.

A second aspect of the present disclosure provides a chip including the computing apparatus of any embodiment in the first aspect of the present disclosure.

A third aspect of the present disclosure provides a board card including the chip described of any embodiment in the second aspect of the present disclosure.

A fourth aspect of the present disclosure provides a method of implementing a convolution operation by using the computing apparatus of any embodiment in the first aspect.

By the computing apparatus, the chip, the board card, and the method of implementing the convolution operation by using the computing apparatus as provided above, the scheme of the embodiment of the present disclosure applies different width dimension folding schemes for input feature maps of different dimensional sizes to adapt to the processing capability of a hardware computing apparatus, thereby fully utilizing the parallel processing capability of a plurality of slave processing circuits and effectively improving the computational efficiency of the convolution operation. Furthermore, since the width dimension is adjacent to an input channel dimension, which is the lowest storage dimension, folding the width dimension does not require additional data arrangement processing by software, simplifying the processing procedure and instruction overhead. In some embodiments, due to the alignment processing of the input channel dimension by hardware during the data transmission in a data path, there is no need to perform the alignment on software, which reduces the memory access IO volume of a storage circuit. Additionally, the convolution operation scheme in the embodiment of the present disclosure may support convolutional strides of arbitrary sizes in a height dimension. The convolution operation scheme in the embodiment of the present disclosure may be applied to convolution operations with any size of the input channel dimension Ci. Other advantages and effects will become easier to understand later in conjunction with the detailed description of the attached drawings.

## BRIEF DESCRIPTION OF DRAWINGS

By reading the following detailed description with reference to accompanying drawings, the above-mentioned and other objects, features and technical effects of exemplary embodiments of the present disclosure will become easy to understand. In the accompanying drawings, several embodiments of the present disclosure are shown in an exemplary but not restrictive manner, and the same or corresponding reference numerals indicate the same or corresponding parts of the embodiments.

FIG. 1 illustrates a structural diagram of a board card according to an embodiment of the present disclosure.
FIG. 2 illustrates a structural diagram of a combined processing apparatus according to an embodiment of the present disclosure.
FIG. 3 illustrates a schematic diagram of an internal structure of a processor core of a single-core or multi-core computing apparatus according to an embodiment of the present disclosure.
FIG. 4 illustrates an example of an exemplary principle of a convolution operation according to an embodiment of the present disclosure.
FIG. 5 illustrates an exemplary structural block diagram of a computing apparatus according to an embodiment of the present disclosure.
FIG. 6a-FIG. 6c illustrate several examples of data width dimension folding according to embodiments of the present disclosure.
FIG. 7a-FIG. 7c illustrate several exemplary zero-padding alignment processing according to embodiments of the present disclosure.
FIG. 8 illustrates a schematic diagram of a convolutional kernel storage method according to an embodiment of the present disclosure.
FIG. 9 illustrates a schematic method of slicing an output feature map according to an embodiment of the present disclosure.
FIG. 10a-FIG. 10d illustrate schematic diagrams of an operating process of the convolution operation scheme according to a first embodiment of the present disclosure.
FIG. 11 illustrates a schematic diagram of the logic for writing and outputting an operation result according to an embodiment of the present disclosure.
FIG. 12 illustrates a schematic diagram of an operating process of the convolution operation scheme according to a second embodiment of the present disclosure.
FIG. 13 illustrates a schematic diagram of an operating process of the convolution operation scheme according to a third embodiment of the present disclosure.
FIG. 14 illustrates a schematic diagram of an operating process of the convolution operation scheme according to a fourth embodiment of the present disclosure.
FIG. 15 illustrates a schematic diagram of an operating process of the convolution operation scheme according to a fifth embodiment of the present disclosure.
FIG. 16 illustrates a schematic diagram of the logic for writing and outputting an operation result according to an embodiment of the present disclosure.

## DETAILED DESCRIPTION OF EMBODIMENTS

Technical solutions in embodiments of the present disclosure will be described clearly and completely hereinafter with reference to accompanied drawings in the embodiments of the present disclosure. Obviously, embodiments to be described are merely some rather than all embodiments of the present disclosure. All other embodiments obtained by those of ordinary skill in the art based on the embodiments of the present disclosure without creative efforts shall fall within the protection scope of the present disclosure.

It should be understood that terms such as "first", "second", "third", and "fourth" as they may appear in the claims, the specification, and drawings are used for distinguishing different objects rather than describing a specific order. It should be understood that terms "including" and "comprising" used in the specification and the claims indicate the presence of a feature, an entity, a step, an operation, an element, and/or an assembly, but do not exclude the existence or addition of one or more other features, entities, steps, operations, elements, components, and/or collections thereof.

It should also be understood that the terms used in the specification of the present disclosure are merely intended to describe specific embodiments rather than to limit the present disclosure. As being used in the specification and the claims of the disclosure, unless the context clearly indicates otherwise, singular forms "a", "an", and "the" are intended to include plural forms. It should also be understood that a term "and/or" used in the specification and the claims refers to any and all possible combinations of one or more of relevant listed items and includes these combinations.

As being used in this specification and the claims, a term "if" may be interpreted as "when", or "once", or "in response to a determination" or "in response to a case where something is detected" depending on the context.

## Exemplary hardware environment

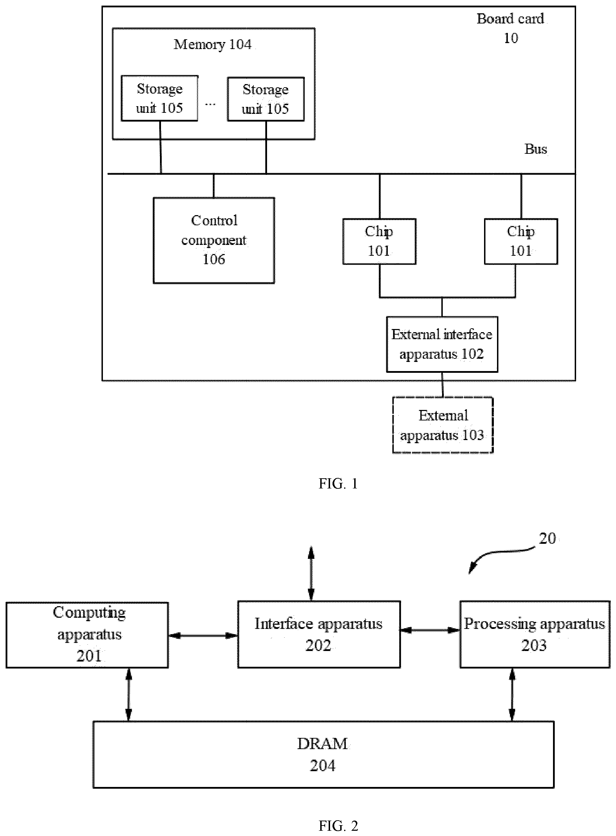

FIG. 1 is a structural diagram of a board card 10 according to an embodiment of the present disclosure. As shown in FIG. 1, the board card 10 includes a chip 101, which is an SoC (system-on-chip), or it is called an on-chip system. The chip 101 is integrated with one or more combined processing apparatuses, where the combined processing apparatus is an artificial intelligence operation unit used to support various types of deep learning and machine learning algorithms to meet the intelligent processing requirements in complex circumstances in the fields of computer vision, speech, natural language processing, data mining, and the like. In particular, the deep learning technology is widely applied in the field of cloud intelligence. A prominent feature of the cloud intelligence application is the large amount of input data, which has high requirements on the storage capacity and computing power of a platform. The board card 10 of this embodiment is suitable for the cloud intelligence application due to its huge off-chip and on-chip storage and powerful computing capability.

The chip 101 is connected to an external apparatus 103 through an external interface apparatus 102. The external apparatus 103 may be, for example, a server, a computer, a camera, a monitor, a mouse, a keyboard, a network card, or a WIFI interface. Data to be operated may be transferred from the external apparatus 103 to the chip 101 through the external interface apparatus 102. A computation result of the chip 101 may also be transferred by the external interface apparatus 102 back to the external apparatus 103. According to different application circumstances, the external interface apparatus 102 may have different interface forms, such as a PCIe (peripheral component interconnect express) interface.

The board card 10 further includes a memory 104 used for storing data, which includes one or a plurality of storage units 105. The memory 104 may connect to and transfer data to a control component 106 and the chip 101 through a bus. The control component 106 in the board card 10 may be configured to regulate and control a state of the chip 101. As such, in an application circumstance, the control component 106 may include an MCU (Micro Controller Unit).

FIG. 2 is a structural diagram of a combined processing apparatus in a chip 101 according to an embodiment of the present disclosure. As shown in FIG. 2, a combined processing apparatus 20 includes a computing apparatus 201, an interface apparatus 202, a processing apparatus 203, and a storage apparatus 204.

The computing apparatus 201 is configured to perform an operation specified by a user, and is mainly implemented as a single-core intelligent processor or a multi-core intelligent processor to perform deep learning computing or machine learning computing. The computing apparatus 201 interacts with the processing apparatus 203 through the interface apparatus 202 to jointly complete the operation specified by the user.

The interface apparatus 202 is used to transfer data and control instructions between the computing apparatus 201 and the processing apparatus 203. For example, the computing apparatus 201 may acquire input data from the processing apparatus 203 via the interface apparatus 202 and write the input data to an on-chip storage apparatus of the computing apparatus 201. Further, the computing apparatus 201 may acquire the control instructions from the processing apparatus 203 via the interface apparatus 202 and write the control instructions to an on-chip control cache of the computing apparatus 201. Alternatively or optionally, the interface apparatus 202 may further read data in the storage apparatus of the computing apparatus 201 and then transfer the data to the processing apparatus 203.

The processing apparatus 203 serves as a general-purpose processing apparatus, and performs basic controls that include, but are not limited to, moving data, starting and/or stopping of the computing apparatus 201. According to different implementations, the processing apparatus 203 may be one or more kinds of general-purpose and/or special-purpose processors, including a CPU (central processing unit), a GPU (graphics processing unit), and the like. These processors include but are not limited to a DSP (digital signal processor), an ASIC (application specific integrated circuit), an FPGA (field-programmable gate array), or other programmable logic devices, discrete gate or transistor logic devices, discrete hardware components, and the like. The number of the processors may be determined according to actual requirements. As described above, with respect to the computing apparatus 201 of the present disclosure only, the computing apparatus 201 of the present disclosure may be viewed as having a single-core structure or an isomorphic multi-core structure. However, when the computing apparatus 201 and the processing apparatus 203 are considered together, both the computing apparatus 201 and the processing apparatus 203 may be viewed as forming a heterogeneous multi-core structure.

The storage apparatus 204 is used for storing to-be-processed data, which may be a DRAM (dynamic random access memory). The storage apparatus 204 is a DDR (double data rate) memory with a size of 16G or more than 16G generally. The storage apparatus 204 is used for saving data of the computing apparatus 201 and/or the processing apparatus 203.

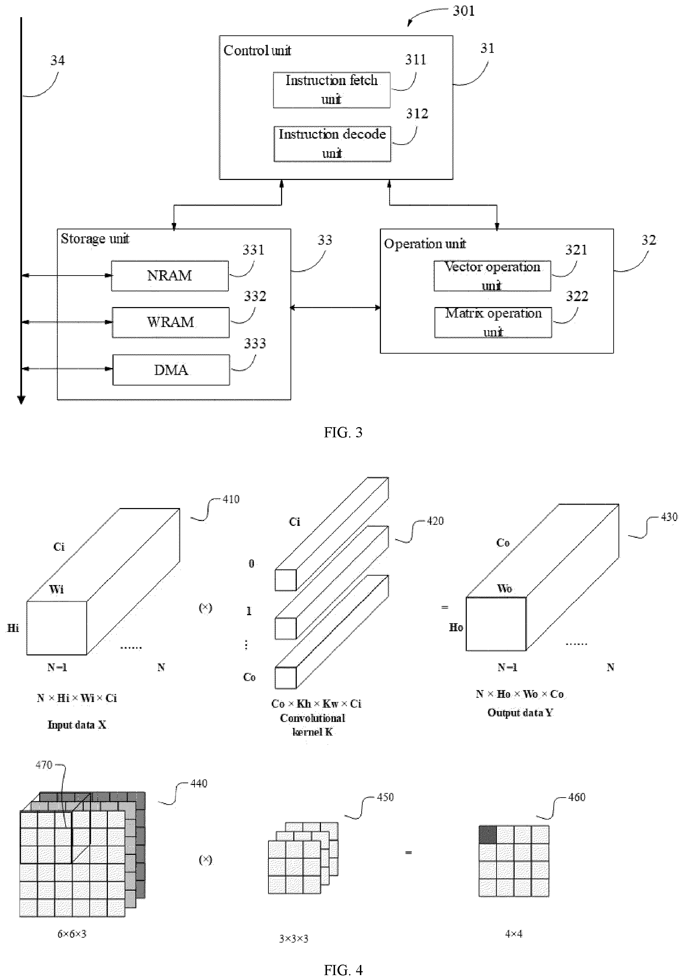

FIG. 3 is a schematic diagram of an internal structure of a processor core of a computing apparatus 201 when it is a single-core or multi-core computing apparatus. The computing apparatus 301 is configured to process input data in the fields of computer vision, speech, natural language, data mining, and the like. The computing apparatus 301 includes 3 units, which are a control unit 31, an operation unit 32, and a storage unit 33.

The control unit 31 is configured to coordinate and control the work of the operation unit 32 and the storage unit 33 to finish a deep learning task. The control unit 31 includes an IFU (instruction fetch unit) 311 and an IDU (instruction decode unit) 312. The instruction fetch unit 311 is configured to acquire an instruction from the processing apparatus 203. The instruction decode unit 312 is configured to decode the acquired instruction and send a decoding result as control information to the operation unit 32 and the storage unit 33.

The operation unit 32 includes a vector operation unit 321 and a matrix operation unit 322. The vector operation unit 321 is used to perform a vector operation, and may support complex operations such as vector multiplication, addition, and nonlinear transformation. The matrix operation unit 322 is responsible for the core computation of the deep learning algorithm, *i.e.,* matrix multiplication and convolution.

The storage unit 33 is used to store or move relevant data and includes an NRAM (neuron RAM) 331, a WRAM (weight RAM) 332, and a DMA (direct memory access) 333. The NRAM 331 is used to store an input neuron, an output neuron and an intermediate result after computation; the WRAM 332 is used to store a convolutional kernel of a deep learning network, *i.e.,* a weight; and the DMA 333 is connected to the DRAM 204 through a bus 34, and is responsible for data transfer between the computing apparatus 301 and the DRAM 204.

## Exemplary type of convolution operation

Based on the foregoing hardware environment, in one aspect, an embodiment of the present disclosure provides a computing apparatus configured to perform a convolution operation, so that a convolution operation such as a convolution operation in a neural network model may be optimized. The convolutional layer in a neural network model may perform a convolution operation. Specifically, by applying a convolutional kernel (also known as a filter, a weight, and the like) to an input feature map (also known as input data, a neuron, or an input neuron) to perform the convolution process, a feature extraction operation may be implemented. There are a plurality of convolutional kernels inside the convolutional layer, and each element that makes up a convolutional kernel corresponds to a weight coefficient and a bias.

A neural network model may contain various convolution operation layers, such as a convolutional layer that performs a forward and conventional 3D convolution operation, and a reverse convolutional layer that performs a depthwise convolution operation. And in a reverse training, it may be necessary to perform a reverse depthwise convolution operation or a cross-product convolution operation. The embodiment of the present disclosure mainly optimizes the conventional 3D convolution operation, and other types of convolution operations may also be optimized without conflict.

In the conventional 3D convolution operation, assuming that a tensor shape of the input feature map in the convolutional layer is denoted as X [N Hi Wi Ci], a tensor shape of the convolutional kernel is denoted as K [Co Kh Kw Ci], and an output result is Y [N Ho Wo Co], a simplified mathematical formula of the convolution operation may be expressed as follows:

$$Y_{in,\ jc,\ jh,\ jw} = \sum_{0 \le ic \le ci,\ 0 \le ih \le kh,\ 0 \le iw \le kw} X_{in,ic,jh \times sh+ih,\ jw \times sw+iw} \times K_{jc,ic,ih,iw} \quad (1)$$

In the above formula, X is the input data, Y is the output data, K is the convolutional kernel, Kh and Kw are the length and width of K, sh and sw are strides in the length and width dimensions, and the formula ignores bias, padding, and dilation, and assumes that the input data X has already been padded and the convolutional kernel has already been dilated. The formula ignores N and C dimensions; and forward computations of the neural network model are independent in the N dimension but fully connected in the C dimension. When the convolutional kernel is working, it may scan the input feature map according to a certain stride and perform matrix elements multiplication and summation of the input feature map and superimpose the bias in a convolutional window. In the conventional 3D convolution operation, element-wise product results in the H, W and Ci dimensions are accumulated, so the operation is called the 3D convolution operation.

However, this 3D convolution operation has a constraint: the size of the Ci dimension of the convolutional kernel is equal to the size of the Ci dimension of the input feature map, so the convolutional kernel does not slide in the Ci dimension, which is a kind of pseudo-3D convolution. For simplicity, the above convolution operation is called the 3D convolution operation.

FIG. 4 illustrates an example of an exemplary principle of the conventional 3D convolution operation that may apply an embodiment of the present disclosure.

A piece of four-dimensional input data X of size [N Hi Wi Ci] is exemplarily illustrated in the figure, which may be represented as N three-dimensional rectangles 410 of size $Hi \times Wi \times Ci$. A four-dimensional convolutional kernel of size [Co Kh Kw Ci] is exemplarily illustrated in the figure, which may be represented as Co three-dimensional convolutional kernels 420 of size $Kh \times Kw \times Ci$. A convolutional result of the input data X and the convolutional kernel K is output data Y, which is a piece of four-dimensional data of size [N Ho Wo Co], and is represented as N three-dimensional rectangles 430 of size $Ho \times Wo \times Co$.

An exemplary convolution operation is also specifically illustrated in the figure, where the input data is an input feature map 440 of size $6 \times 6 \times 3$, and the N dimension is omitted; the convolutional kernel is a three-dimensional convolutional kernel 450 of size $3 \times 3 \times 3$, and is computed with a single Co; and the output data is a $4 \times 4$ output feature map 460. The specific computing procedure is as follows.

A convolutional kernel 450 may scan an input feature map 440a according to a certain stride, and perform matrix element multiplication and summation of the input feature and superimpose the bias in a convolutional window 470. In other words, a value at each position in the output feature map 460 is obtained by performing a two-dimensional operation on a corresponding block of each input feature map with a corresponding convolutional kernel and summing obtained convolutional results. For example, the figure illustrates that a value (*i.e.,* a convolutional output point) at a position (0,0) on the output feature map 460 is obtained by performing a two-dimensional convolution operation on the convolutional window 470 framed by a black cube in the input feature map and the three-dimensional convolutional kernel 450 to obtain three values and summing the obtained three values.

To obtain outputs at other positions, a position of the convolutional kernel 450 may be shifted on the input feature map 440, in other words, a convolutional window of a convolutional output point may be shifted. In an example in the figure, a convolutional stride (Sx, Sy) is (1,1), and when the convolution operation is performed after moving one frame to the right in the horizontal dimension (width dimension) or one frame down in the vertical dimension (height dimension), a value at a position (0,1) or (1,0) on the output feature map 460a may be obtained, respectively.

From the above description, it can be seen that in a convolutional layer of the neural network, there are N groups of input feature maps, and each group contains $Hi \times Wi \times Ci$ pieces of information, where Hi and Wi are the height and width of the input feature maps, respectively, and Ci is the number of input feature maps, also known as the number of input channels. The convolutional layer has $Ci \times Co$ convolutional kernels of size KhxKw, where Ci is the number of input channels, Co is the number of output feature maps (or the number of output channels), and Kh and Kw are the height and width of the convolutional kernel, respectively. The output feature maps contain $Ho \times Wo \times Co$ pieces of information, where Ho and Wo are the height and width of the output feature maps, respectively, and Co is the number of output channels. In addition, in the convolution operation, the convolutional stride (Sx, Sy) may also be involved, and the size of the convolutional stride may affect the size of the output feature maps.

In the present disclosure, the input feature map, the input data, the neuron or the input neuron are used interchangeably; the convolutional kernel, the filter or the weight are used interchangeably; and the output feature map, the output data or the output neuron are used interchangeably. In addition, the H (height) and the Y dimensions are used interchangeably, and the W (width) and the X dimensions are used interchangeably. Accordingly, the H dimension of the input feature map may be denoted as Hi or Yi, the H dimension of the output feature map may be denoted as Ho or Yo, and the W dimension is similarly denoted. In the embodiment of the present disclosure, each convolutional output point has a corresponding convolutional window, and a shape of the convolutional window is the same as a shape of the convolutional kernel. The value of each convolutional output point corresponds to an element-wise multiply-accumulate result of the input feature maps and weights within the convolutional window of the convolutional output point.

### Exemplary computing apparatus

In the embodiment of the present disclosure, a master-slave architecture computing apparatus may be used to implement the above convolution operation. Further, different data paths may be configured for input feature maps and convolutional kernels to improve access efficiency.

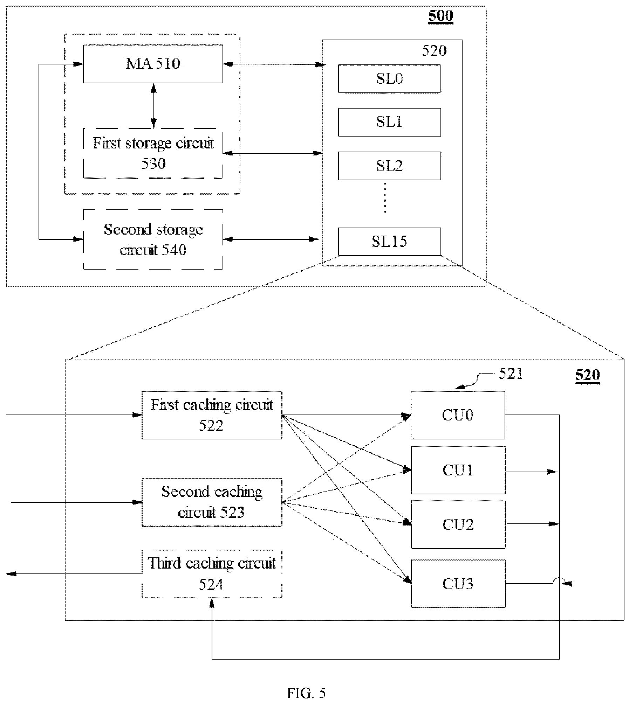

FIG. 5 illustrates an exemplary structural block diagram of a computing apparatus 500 according to an embodiment of the present disclosure. It may be understood that the structure may be considered as a refinement of the internal structure of a computing circuit of the single processing core in FIG. 3, or as a joint functional division block diagram based on the computing circuits of a plurality of processing cores shown in FIG. 3. As shown in FIG.5, a computing apparatus 500 in an embodiment of the present disclosure may be configured to perform various types of convolution operations. The computing apparatus 500 may include a master processing circuit (MA) 510 and a plurality of slave processing circuits (SL) 520, and there are 16 slave processing circuits SL0 to SL15 illustrated in the figure. It may be understood by those skilled in the art that the number of slave processing circuits may be more or less, depending on the specific hardware configuration, and the embodiment of the present disclosure has no limitation in this respect.

The master processing circuit and the salve processing circuits may communicate with each other through various connections; and a plurality of salve processing circuits may communicate with each other through various connections. In different application circumstances, the connection methods between the plurality of salve processing circuits may be either a hard connection method arranged by a hard wire or a logical connection method configured according to, for example, a microinstruction, to form a variety of topological structures of arrays of slave processing circuits, which is not limited in the embodiment of the present disclosure. The master processing circuit and the slave processing circuits may cooperate with each other, thereby realizing a parallel operation.

To support the operation function, the master processing circuit and the slave processing circuits may include various computing circuits, such as a vector operation unit and a matrix operation unit. The vector operation unit is used to perform a vector operation, and may support complex operations such as vector multiplication, vector addition, and vector nonlinear transformation. The matrix operation unit is responsible for core computation of the deep learning algorithm, such as matrix multiplication and convolution.

The slave processing circuits may be used, for example, to perform an intermediate operation on corresponding data in parallel according to an operating instruction to obtain a plurality of intermediate results, and to transmit the plurality of intermediate results back to the master processing circuit.

By setting the computing apparatus 500 into a master-slave structure (such as a structure with one master processing circuit and multiple slave processing circuits, or a structure with multiple master processing circuits and multiple slave processing circuits, which is not limited in the present disclosure), data may be sliced according to a computing instruction of a forward operation, so that a plurality of salve processing circuits are used to perform parallel operations on the parts that require large amount of computation, thus improving the operation speed, saving the operation time, and then reducing the power consumption.

In some embodiments of the present disclosure, by utilizing different data paths to transmit input feature maps and weights, multiple ways of reusing input feature maps and weights may be supported, thus reducing the data throughput during computation and improving processing efficiency.

Specifically, the computing apparatus 500 may further include a first storage circuit 530 and a second storage circuit 540 for storing data transmitted via different data paths, respectively. Optionally, the first storage circuit 530 and the second storage circuit 540 may be two storage blocks formed by dividing the same memory, or may be two separate memories, which are not specifically limited herein.

The first storage circuit 530 may be used to store multicast data, in other words, data in the first storage circuit may be transmitted to a plurality of slave processing circuits via a broadcast bus, and the slave processing circuits receive the same data. It may be understood that broadcast and multicast may be achieved through the broadcast bus. The multicast refers to a communication mode where a piece of data is transmitted to a plurality of slave processing circuits; and the broadcast refers to a communication mode where a piece of data is transmitted to all slave processing circuits. The broadcast is a special case of the multicast. Since both multicast and broadcast are one-to-many transmission modes, the present disclosure does not make a special distinction between the two. Both the broadcast and multicast may be collectively referred to as multicast, the meaning of which may be clarified by those skilled in the art based on the context.

The second storage circuit 540 may be used to store distribution data, in other words, data in the second storage circuit may be separately transmitted to different slave processing circuits, and each of the slave processing circuits receives different data.

By providing the first storage circuit and the second storage circuit separately, data to be operated may be transmitted in different modes, thereby reducing the data throughput by reusing the multicast data among the plurality of slave processing circuits.

In some embodiments, the input feature maps may be determined as multicast data and stored in the first storage circuit to transmit the data to a plurality of scheduled slave processing circuits by the broadcast mode during operating. Correspondingly, the convolutional kernel may be determined as distribution data and stored in the second storage circuit. The distribution data may be distributed to corresponding slave processing circuits before operating.

FIG. 5 also illustrates a schematic diagram of an internal structure of a salve processing circuit SL according to an embodiment of the present disclosure. As shown in the figure, each slave processing circuit 520 may include a plurality of computing circuits CU 521, a first caching circuit 522, and a second caching circuit 523. Four computing circuits CU0 to CU3 are illustrated in the figure. It may be understood by those skilled in the art that the number of computing circuits may be more or less, depending on the specific hardware configuration, and the embodiment of the present disclosure has no limitation in this respect.

In some embodiments, the first caching circuit 522 may be used to cache weights or input feature maps allocated to the slave processing circuit. Accordingly, the second caching circuit 523 may be used to cache the input feature maps or weights allocated to the slave processing circuit. Both the first caching circuit 522 and the second caching circuit 523 are used to select data involved in the operation. Data of the first caching circuit 522 may be a plurality of data lines from, for example, the first storage circuit 530 or the second storage circuit 540, and correspondingly, data of the second caching circuit 523 may be a plurality of data lines from, for example, the second storage circuit 540 or the first storage circuit 530. Depending on specific reusing methods, these data lines may be distributed to a corresponding computing circuit CU 521 or broadcast to all CUs 521 within the slave processing circuit 520 during operation.

Each of the computing circuits CU 521 is used to, in each operation cycle, perform an element-wise multiply-accumulate operation on data lines selected from the first caching circuit and data lines selected from the second caching circuit, respectively.

By providing the first caching circuit and the second caching circuit separately, data to be operated may be transmitted in different modes, thereby reducing the data throughput by reusing the data among the plurality of computing circuits in a single slave processing circuit as much as possible.

The slave processing circuit 520 may also include a third caching circuit 524 for caching computation results of each computing circuit CU 521.

It may be understood that although each processing circuit and each storage circuit are shown as individual units in FIG. 5, the storage circuits and the processing circuits may also be combined into a single unit depending on the configuration. For example, the first storage circuit 530 may be combined with the master processing circuit 510; the second storage circuit 540 may be shared by a plurality of slave processing circuits 520, and each slave processing circuit may be allocated with a separate storage area for accelerating access, which is not limited in the embodiment of the present disclosure. In addition, in the computing apparatus, the master processing circuit and the salve processing circuits may belong to different units of the same processor or chip, or to different processors, which is not limited in the present disclosure.

### An exemplary folding scheme of an input feature map in the W dimension

In an embodiment of the present disclosure, the dimensions of multidimensional data involved are represented as (N,H,W,C) or (Co,H,W,Ci), which represent the storage order of the data in the memory. It may be understood that although the multidimensional data has multiple dimensions, since the layout of the memory is always one-dimensional, there is a correspondence between the multidimensional data and the storage order of the memory. The multidimensional data is usually allocated in continuous storage space, in other words, the multidimensional data may be unfolded into a one-dimensional format and stored sequentially into the memory. For example, in the embodiment of the present disclosure, an initial input feature map may be stored sequentially in a low-dimensional (here C/Ci is the lowest dimension) prioritized manner. Adjacent dimensions are dimensions that are next to each other in the dimensional information of the multidimensional data, for example, W and Ci are adjacent to each other. When the storage order is consistent with the dimension order, positions of adjacent dimensions on the memory are consecutive. Here W and Ci are adjacent to each other and data in the two dimensions are also consecutive on the memory.

In an intelligent processor, due to the requirements for computing power and considerations of area and power consumption, a main computing circuit of the hardware is a multiply-accumulate arithmetic unit. In hardware design, to support a variety of convolutional algorithms, the essence lies in maximizing the extraction of a multiply-accumulate operation from the algorithms and efficiently exchanging input and output data of the multiply-accumulate operation between an on-chip RAM (such as an NRAM and a WRAM in FIG.3) and the arithmetic unit via data paths.

Data is stored in the hardware line by line (caching lines), and the efficiency of reading, writing, and computing is highest when the whole line is aligned, so in order to make full use of bandwidth and meet the throughput requirements of an arithmetic unit array, data is typically vectorized and aligned. An artificial intelligence chip is usually designed with the Ci dimension as the lowest dimension, in other words, for the NHWC (number of sub-tensors, height, width, channel) placement order described above, the data in the Ci dimension is consecutive. Thus, the vectorized alignment requires that the size of the Ci dimension is aligned to a specified value, such as an alignment value M, thereby accessing data in units of this alignment value M, where M may also be referred to as the maximum amount of data computed by the hardware at one time. Based on different hardware designs, M may have different values, such as 64bit, 128bit, 256bit, 512bit, and the like. Typically, the size of an input port of the arithmetic unit array is also related to M. For example, when the bit width of the input data is symmetrical, the size of the input port of the arithmetic unit array is usually 2 times that of M, in other words, the size of the input port of the arithmetic unit array may be data of the input feature map and weight data of the alignment value M size processed at one time. It is easier to satisfy the above alignment requirement when the Ci dimension of the input feature map is large.

When the Ci dimension of the input feature map is small or when a remainder obtained by dividing Ci with M is small, for example, when the Ci dimension of the input feature map or a remainder obtained by dividing Ci with M is less than the size of one caching line, the data in the Ci dimension is required to be padded to one line of data (such as 512 bits), in other words, invalid data 0 is filled. This padding way results in a large number of redundant computations, leading to a waste of resources and a reduction in operating efficiency.

A lite convolution scheme is proposed in the present disclosure, which is suitable for the case of a small channel C, in which data involved in the operation is spliced based on a slicing unit and stored in an order of converted dimensions. The amount of data contained in a slicing unit may be set to the alignment value M processed by the hardware at a time, so that the computation may be performed in units of a slicing unit, and in this way, the computing power of the hardware may be fully utilized to avoid or reduce the invalid computation.

However, in this lite convolution scheme, both the input feature map and the convolutional kernel are required be pre-processed by software for tiling and dimension conversion, and the output feature map is also required to be processed by software for tiling and dimension conversion accordingly, which undoubtedly increases the complexity of the software. In addition, the software is required to perform the alignment processing during these tiling and dimension conversion processes. Further, the lite convolution scheme only supports convolution operations with a convolutional stride of 1 in both the width and height dimensions.

In view of this, in order to further optimize the convolution operation and reduce software complexity, an embodiment of the present disclosure provides a convolution scheme of folding in the width dimension, referred to as Wfold, which compensates the data in the W dimension that is continuous with the Ci dimension of the input feature map to the Ci dimension only when needed, thereby eliminating the need for software to perform data slicing and dimensional conversion processing.

Specifically, in some embodiments, a computing apparatus is provided and configured to perform a convolution operation. The computing apparatus includes: a storage circuit that stores input feature maps and convolutional kernels, where the convolutional kernels are stored in blocks according to a dimension of an output channel Co to be allocated to different slave processing circuits; a master processing circuit that aligns a dimension of an input channel Ci of the input feature maps to the input channel slicing granularity Pci, forms input feature data lines by combining data of each slicing granularity with Ws multiples of data in a width dimension, and broadcasts the input feature data lines to a plurality of slave processing circuits to perform the convolution operation, where Pci*Ws=M, and M is the amount of data processed by hardware in a single operation; and a plurality of slave processing circuits configured to perform convolution operations on the broadcasted input feature maps and corresponding convolutional kernels allocated to the slave processing circuits, respectively.

In some embodiments, the input channel slicing granularity Pci may be determined based on the size of the dimension of the input channel Ci of the input feature map and the amount of data M processed by the hardware at one time; and subsequently, a folding multiple Ws of the width W dimension of the input feature map may be determined based on the slicing granularity Pci. In some embodiments, Ws=M/Pci. It is understood that the convolution scheme of the embodiment of the present disclosure may be adapted to any Ci size by slicing the Ci dimension according to the slicing granularity. Moreover, it is also understood that the maximum slicing granularity Pci does not exceed the alignment value M processed by hardware at one time (or called a base alignment value, *i.e.,* the amount of data processed by the hardware at a time). As a result, with different ranges of values for Ci, a suitable Pci may be chosen, and the alignment requirement for the Ci dimension may be reduced by padding data in the adjacent W dimension to the Ci dimension.

In some embodiments, the input channel slicing granularity Pci may be chosen to be $M/2^n$, n=0,1, 2,..., thus facilitating the folding of data $2^n$ times from the second-lowest storage dimension W to the lowest storage dimension Ci. Table 1 illustrates several folding schemes corresponding to the input channel slicing granularity Pci, assuming M=64B.

Table 1

| Slicing granularity (Pci) | 4B | 8B | 16B | 32B | 64B |
|---|---|---|---|---|---|
| Ws (W folding) | 16 | 8 | 4 | 2 | 1 |

From the Table 1, it can be seen that the smaller the input channel slicing granularity, the more copies of data padded from the Wi dimension to the Ci dimension, and the larger the constrained size of the alignment on Wi, in which Wi/Ws≥1 is required to be met.

It can be understood that although a theoretical slicing granularity may be $M/2^n$, considering the requirements on W dimension, the instruction overhead, and the actual Ci value range when the slicing granularity is too small, only some values within $M/2^n$ may be selected as an alternative slicing granularity. In an example that M is equal to 64B, the alternative slicing granularity may include, such as 64B, 32B, 16B and 8B.

Different slicing granularities may be applied to different computing scenarios, resulting in different levels of performance optimization. Specifically, in some embodiments, the input channel slicing granularity Pci may be selected as follows:

aligning the lowest storage dimension Ci of the input feature map to each alternative slicing granularity separately; and

selecting an appropriate slicing granularity considering the amount of aligned pad aligned to each alternative slicing granularity and the size of the corresponding slicing granularity, for example, an alternative slicing granularity where the amount of aligned pad is within a predetermined range and as large as possible is used as Pci.

For example, in the case of the same amount of aligned pad, the larger slicing granularity is preferred; or in the case of different amounts of aligned pad, the slicing granularity with the smallest amount of aligned pad is preferred; or in the case of a small difference in the amount of aligned pad (for example, the amount of aligned pad is within a predetermined range, such as no more than 16B), the larger slicing granularity is preferred.

Although rules for selecting the input channel slicing granularity Pci are listed above, however, these rules are only preferred embodiments for selecting the preferred input channel slicing granularity that best suits the current value of Ci. The application of the above rules is described below in conjunction with several examples. In all examples, it is assumed that M is equal to 64B, the alternative slicing granularity may include 64B, 32B, 16B and 8B.

In an example, it is assumed that Ci is equal to 48B, no complementary zero is required for being aligned to 8B and 16B, and 16B is required for being aligned to 32B and 64B. At this point, a larger slicing granularity that does not require zero-completion may be preferred as the Pci, *i.e.,* 16B.

In another example, it is assumed that Ci is equal to 28B, 4B of complementary zeros are required for being aligned to 8B, 16B, and 32B, and 36B of complementary zeros are required for being aligned to 64B. At this point, a larger slicing granularity with smaller amount of aligned pad may be preferred as the Pci, *i.e.,* 32B.

In another example, it is assumed that Ci is equal to 49B, 7B of complementary zeros are required for being aligned to 8B, and 15B of complementary zeros are required for being aligned to 16B, 32B, and 64B. At this point, the difference in the amount of aligned pad is only 8B, which is within an acceptable range, so a larger slicing granularity 64B may be preferred.

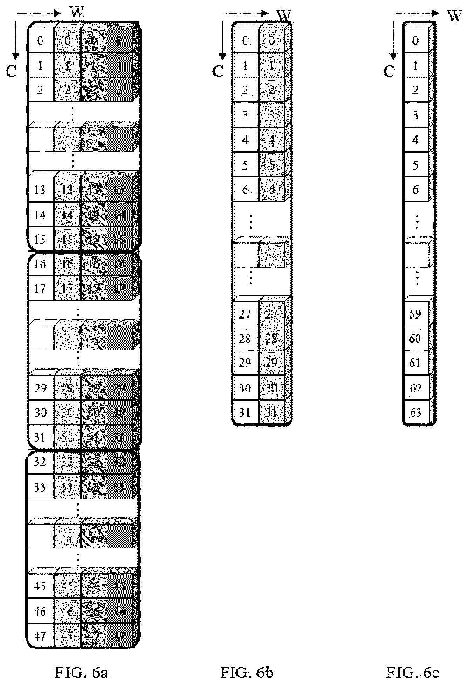

FIG. 6a-FIG. 6c illustrate several examples of data width dimension folding according to embodiments of the present disclosure. In these examples, it is also assumed that M is equal to 64B.

As shown in FIG. 6a, the W dimension is required to be folded by a factor of 4 when the input channel slicing granularity Pci is determined to be 16B. In other words, a shape of a data line is Wi*Ci=4×16B. When the size of the Ci dimension exceeds 16B, data on 1*Ci is sliced in a plurality of data lines. For example, when Ci is equal to 48B, data on the Ci is sliced in 3 data lines. The figure shows data included in each of the 3 data lines in rounded rectangular boxes, where 3 may also be referred to as the number of slicing blocks in the Ci dimension.

As shown in FIG. 6b, the W dimension is required to be folded by a factor of 2 when the input channel slicing granularity Pci is determined to be 32B. In other words, a shape of a data line is Wi*Ci=2×32B. Similarly, when the size of the Ci dimension exceeds 32B, data on 1*Ci is sliced in a plurality of data lines. For example, when Ci is equal to 96B, data on the Ci is sliced in 3 data lines. Only a single data line is shown in the figure.

As shown in FIG. 6c, when the input channel slicing granularity Pci is determined to be 64B, the W dimension is required to be folded by a factor of 1, in other words, the W dimension does not need to be folded. At this point, a shape of a data line is Wi*Ci=1×64B. Similarly, when the size of the Ci dimension exceeds 64B, data on 1*Ci is sliced in a plurality of data lines. For example, when Ci is equal to 128B, data on the Ci is sliced in 2 data lines. Only a single data line is shown in the figure.

As mentioned above, in some embodiments, the master processing circuit 510 in the FIG. 5 may determine the input feature maps as multicast data and stored in the first storage circuit 530 to transmit the data to a plurality of scheduled slave processing circuits by the broadcast mode during operating. As can be seen from the previously described width folding scheme, the format of the input data does not require tiling and dimension conversion processing because W and C are continuous dimensions, and thus the original input data format HWC may be received directly. Accordingly, in the first storage circuit 530, the input feature map may be stored therein in an original format (such as HWC).

When the input feature map is read from the first storage circuit 530 and broadcast to the plurality of slave processing circuits, the aforementioned alignment processing may be performed. In other words, during the transmission from the first storage circuit to a caching circuit (such as the first caching circuit) within the slave processing circuit, the master processing circuit 510 may control to perform the alignment on the Ci dimension to align the data on the Ci dimension to the determined input channel slicing granularity Pci, and then a corresponding amount of data in the Wi dimension is folded to form a data line, and a data line is taken as the minimum granularity and broadcast to the slave processing circuit.

In the transmission process from the first storage circuit to the caching circuit within the slave processing circuit, different data read and write schemes may be employed.

In some embodiments, the input feature map data may be directly read from the first storage circuit and then continuously written to the caching circuit of the slave processing circuit. During writing the read input feature map data, padding is performed on the read data to align to the input channel slicing granularity Pci based on situations. In those embodiments, depending on the number of sliced blocks along the Ci dimension, either continuous reading or interleaved (non-continuous) reading may be adopted. Please note that the "continuous" or "interleaved" in the present disclosure refers to whether the data is continuous or interleaved in terms of storage addresses.

In an example, when the number of sliced blocks along the Ci dimension is 1, which means that the Ci dimension has not been sliced, Ci≤Pci, and in this case, a single W contains only one Pci. When Ws number of Ws are required to be read, these Ws are continuous. Consequently, in this scenario, data of Ws number of Ws may be read through a single reading request, thereby simplifying instructions. Of course, it is also possible to read out continuous pieces of data of Ws number of Ws through multiple reading requests.

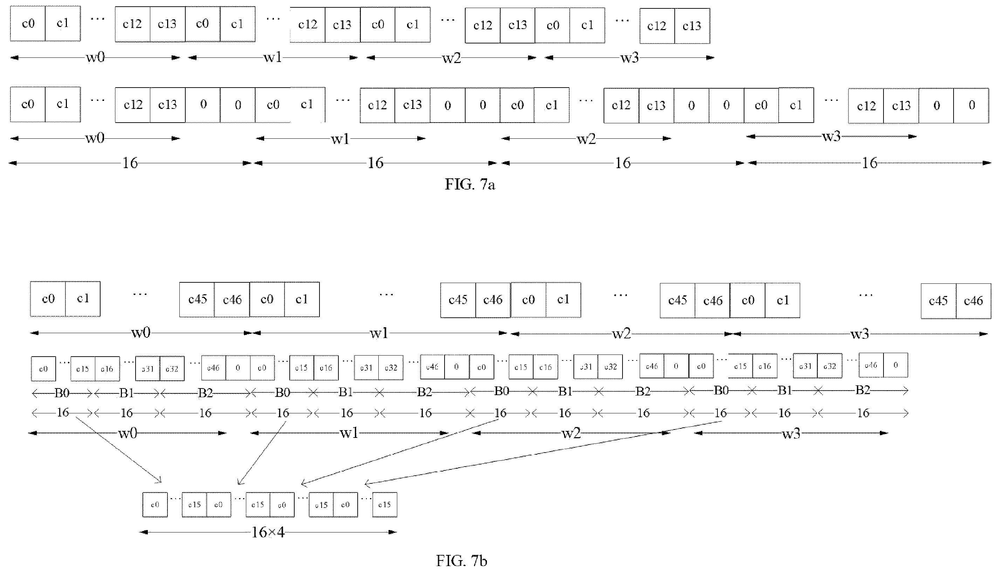

FIG. 7a illustrates an exemplary data reading and writing scheme and a possible zero-padding alignment processing according to an example of the present disclosure.

As shown in FIG. 7a, assuming a shape of the input data is $4 \times 9 \times 14B$ (HWC), and the determined input channel slicing granularity Pci is 16B, then the number of sliced blocks in the Ci dimension is 1. Each time, Ws (Ws=4) number of Ws are required to be merged into a data line for output, where each W is required to be padded with zeros for being aligned to 16B in the Ci dimension. In other words, 4 Ws are read from the first storage circuit, each W is padded with 2B of zeros, so the 4 Ws are merged into a data line of $4 \times 16B = 64B$ and broadcast to the slave processing circuits.

In this example, given that the number of sliced blocks in the Ci dimension is 1, the read 4 Ws are continuous, which means that a single reading request may be used to read out the 4 Ws at once, or multiple reading requests may be used to read out the continuous data of the 4 Ws.

In another example, when the number of sliced blocks in the Ci dimension is not 1, in other words, when the Ci dimension is sliced into multiple slice granularities Pci, Ci> Pci. Since a data line is composed of Ws*Pci, it is necessary to read the Pci in each W in an interleaved manner. The reading interval is 1*Ci (WCi), *i.e.,* 1 W. To a data volume of Pci, a reading operation is required to be performed Ws times. In other words, the reading operation is required to be performed Ws times, and the amount of Pci data on 1 W is read at equal intervals each time. In this scenario, data may be read through Ws read requests. Through each read request, the amount of data of Pci is read from each corresponding W separately.

FIG. 7b illustrates an exemplary data reading and writing scheme and a possible zero-padding alignment processing according to another example of the present disclosure.

As shown in FIG. 7b, assuming that the shape of the input data is $4 \times 9 \times 47B$ (HWC), and the determined input channel slicing granularity Pci is 16B, then each time it is necessary to merge part of the data from Ws number of Ws into a single data line for output, where Ws=4, and each W is required to be padded with zeros for being aligned to 16B*3=48B in the Ci dimension. In this case, the interleaved reading is required and may be achieved through 4 reading requests. Specifically, 4 reading requests may be sent to read a first sliced data block, where Pci=16B, in each W at equal intervals, respectively. In other words, through a first request, the data amount B0 of a first Pci is read from a W0 in the first storage circuit; through a second request, the data amount B0 of the first Pci is read from a W1 in the first storage circuit; through a third request, the data amount B0 of the first Pci is read from a W2 in the first storage circuit; and through a fourth request, the data amount B0 of the first Pci is read from a W3 in the first storage circuit. The data of each Pci read from the 4 Ws are merged into a single data line of 4*Pci=64B and stored in the caching circuit. Next, another 4 reading requests are sent to read a second data sliced block, where Pci=16B, in each W at equal intervals, respectively. Finally, another 4 read requests are sent to read a last data sliced block in each W at equal intervals, respectively. At this point, alignment processing may be processed, and each data sliced block is inserted with 1B of zeros, thereby being merged into a single data line of $4 \times 16B = 64B$ and broadcast to a salve processing circuit.

In other embodiments, when it is necessary to perform the interleaved reading on the first storage circuit, considering that the first storage circuit is typically an RAM, the difficulty and cost of performing the interleaved reading are relatively high, to simplify the implementation, an intermediate storage circuit may be additionally provided. The intermediate storage circuit may be implemented using a register, which makes it easier to achieve interleaved reading or non-continuous reading.

Specifically, in these embodiments, a certain number of consecutive input feature map data may be first read from the first storage circuit, and the read data is written into an intermediate storage circuit. Then, data is read in the interleaved manner from the intermediate storage circuit and continuously written into a caching circuit of the slave processing circuit. During the period of reading data from the intermediate storage circuit and writing the data into the caching circuit, padding is performed on the data to align to the input channel slicing granularity Pci based on situations. The amount of consecutive data read from the first storage circuit may be Ws number of Cis. That is, continuous data of Ws*Ci is read and stored in the intermediate storage circuit. Subsequently, data may be read in the interleaved manner from the intermediate storage circuit and stored in the caching circuit of the slave processing circuit in the same manner as in the previous example.

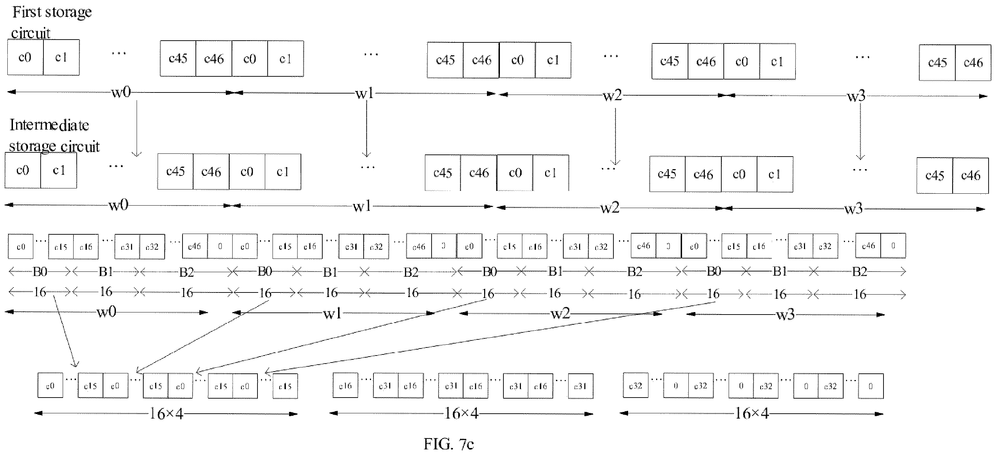

FIG. 7c illustrates an exemplary data reading and writing scheme and a possible zero-padding alignment processing according to another example of the present disclosure.

As shown in FIG. 7c, assuming the shape of the input data is $4 \times 9 \times 47B$ (HWC), and the determined input channel slicing granularity Pci is 16B, then each time it is necessary to merge Ws number of Ws into a single data line for output, where Ws=4, and each W is required to be padded with zeros for being aligned to 16B*3=48B in the Ci dimension.

In this example, first, a certain number of consecutive input feature map data may be read from the first storage circuit, and the read data is written into an intermediate storage circuit. Specifically, four pieces of data of 1*47B may be read sequentially, which may be, for example, achieved through four reading requests. First, reading is performed continuously in the Ci dimension until one Ci is read completely. Then, the next Ci is read by moving by 1 in the W dimension until continuous data of four Ws is read. In an implementation, 4 reading requests may be sent, respectively. Through a first request, 47B (Ci) data is read from a W0 in the first storage circuit; through a second request, 47B data is read from a W1 in the first storage circuit; through a third request, 47B data is read from a W2 in the first storage circuit; and through a fourth request, 47B data is read from a W3 in the first storage circuit. The 47B data on these four Ws that are read are written into the intermediate storage circuit.

Then, 3*(4*16B) of data is fetched from the intermediate storage circuit respectively and sent to the caching circuit of the slave processing circuit for performing a convolution operation. In this process, a process of 4*(147B) to 3(4*16B) is similar to the example shown in FIG. 7b, which means that the data is read in the interleaved manner on the intermediate storage circuit, which will not repeated herein.

Thus, the storage format of the input feature maps and the folding processing on the input feature maps via the data path in the embodiment of the present disclosure are described above.

## Exemplary storage of the convolutional kernel

A computation of convolution involves each input feature map undergoing multiply-accumulate operations with each of the convolutional kernels for Co to output Co output feature maps. However, it is not always possible to store all sizes of convolutional kernels and input feature maps in on-chip space at the same time, so there are a series of repeated loading of input feature data or weight data on the hardware, and how to balance the repeated loading of input feature data or weight data may have a certain impact on the efficiency of the computation. In the actual operation, in order to reduce the frequent off-chip access, different reuse methods may be adopted according to scale characteristics of data involved in the operation.

According to the principle of the convolution operation described above, it can be seen that operation results in the Co dimension are not required to be accumulated, and thus operations on different Co may be performed relatively independently on different computing circuits. In other words, convolutional kernels of different Co may be allocated on different computing circuits, and the same input feature map is used for operating, at this point, the input feature map is reused among the computing units, and the reuse times Rn is equal to Ns, where Ns is the number of computing circuits.

In some embodiments of the present disclosure, a Co value assigned to each slave processing circuit for processing may be determined based on the size of the dimension of the output channel Co of the convolutional kernel and the number Ns of schedulable slave processing circuits.

To simplify the scheduling of the slave processing circuits, in some embodiments, an output channel alignment value Aco may be determined according to the size of the dimension of the output channel Co of the convolutional kernel. Then, based on the alignment value Aco, the convolutional kernel may be stored in blocks according to the Co dimension to enable the schedulable slave processing circuits to load a corresponding weight block. In some embodiments, the output channel alignment value Pco may be selected as a multiple of the number Ns of schedulable slave processing circuits, so as to facilitate evenly distributing Co to Ns slave processing circuits. For example, each slave processing circuit processes convolutional kernels with different Aco/Ns Co values at intervals of Ns.

Specifically, a preferred output channel alignment value Aco may be determined according to the value range of Co. For example, a following rule may be applied:

when $Ns*(m-1) < Co \leq Ns*m$, and m=1,2, ..., Aco= Ns*m.

As mentioned above, in some embodiments, the convolutional kernel may be determined as distribution data and stored in the second storage circuit 540 to be distributed to or read by the corresponding slave processing circuit before the operation. The second storage circuit 540 may be shared by a plurality of (such as Ns) slave processing circuits 520, and a separate storage area is assigned to each slave processing circuit, such that data required for the computation of each slave processing circuit only needs to be read from its corresponding storage area, accelerating the access speed. When the convolutional kernel is sliced and stored according to the Co dimension, the convolutional kernel corresponding to the Co value assigned to a certain slave processing circuit may be stored in a corresponding storage area of the second storage circuit. Since the Co dimension is the highest storage dimension of the convolutional kernel, there is no need to perform processing such as dimension conversion for the slicing and storage operations on the Co dimension; instead, it is sufficient to directly store the data of the convolutional kernel corresponding to the Co value in the original format (such as KhKwCi) in the second storage circuit.

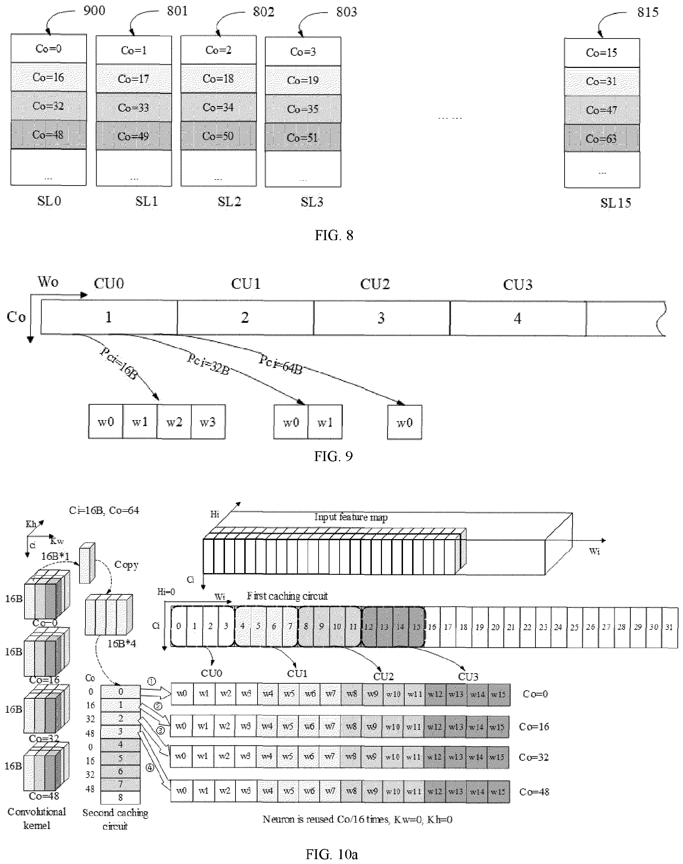

FIG. 8 illustrates a schematic diagram of a convolutional kernel storage method according to an embodiment of the present disclosure. 16 storage areas 800 to 815 allocated for, for example, when Ns is equal to 16, 16 slave processing circuits SL0 to SL15 are exemplarily shown in the figure. A convolutional kernel corresponding to the Co value to be processed by the slave processing circuit is stored in each storage area.

As mentioned previously, the Co dimension of the convolutional kernel is aligned to Aco. When Ns=16, Aco may be 16, 32, 48, 64, and so on. Therefore, the convolutional kernels are sliced according to Co and stored in various storage areas of the second storage circuit to be allocated to a corresponding SL. In a storage area corresponding to each SL, convolutional kernels with different Co values allocated to it are stored. In an example, consecutive Co values are allocated to the 16 SLs one by one sequentially (*i.e.,* at intervals of 1), and after one round of allocation is completed, the allocation starts again from the beginning. For example, as shown in the figure, convolutional kernels with Co=0~15 are sequentially stored in 16 storage areas 800-815; next, convolutional kernels with Co=16~31 are sequentially stored in 16 storage areas 800 to 815, and so on. Therefore, after each round of operation is completed, a Co dimension of an operation result output by each slave processing circuit is continuous. In another example, the convolutional kernels may also be sequentially sliced into blocks according to the Co value. Each SL processes one block, and each block includes convolutional kernels with consecutive Aco/Ns Co values. For example, assuming Aco = 64, convolutional kernels with Co=0~3 are stored in the storage area 800 allocated to SL0, convolutional kernels with Co=4~7 are stored in the storage area 801 allocated to SL1, convolutional kernels with Co=8-11 are stored in the storage area 802 allocated to SL2, and so on, until convolutional kernels with Co=60~63 are stored in the storage area 815 allocated to SL15. Thus, the Co dimension processed by each SL is consecutive.

From the above Co slicing, it can be seen that each slave processing circuit may be required to process convolutional kernels with one or more Co values. In a scenario of processing multiple Co values, the input feature map processed by each slave processing circuit may be further reused for convolutional kernels of these multiple Co values. The maximum reuse times is m=Aco/Ns, where rn represents the number of times that the input feature map is reused within a single slave processing circuit. Factors such as constraints on caching space of hardware (such as the sizes of the first caching circuit and the second caching circuit in FIG. 5) may be considered to determine the number of times that the input feature map is reused within a single slave processing circuit.

The above describes that the convolutional kernels are aligned according to the Co dimension and block-stored in the second storage circuit. Similarly to the input feature map, a similar alignment operation may be also performed on each convolutional kernel with Co value in the Ci dimension.

In some embodiments, when the convolutional kernel is read from the second storage circuit and distributed to the corresponding slave processing circuit, the alignment operation may be performed. In other words, during the transmission from the second storage circuit to a caching circuit (such as the second caching circuit) within the slave processing circuit, the alignment is performed on the Ci dimension of the convolutional kernel to align the data on the Ci dimension to the previously determined input channel slicing granularity Pci. Unlike the input feature map, the convolutional kernel is not required to be folded in the W dimension but is copied and extended according to the folding multiple Ws, which can be seen in the subsequent description of the convolution operation process.

## Exemplary convolution operation process in a single slave processing circuit

After the input feature map is broadcast to the scheduled slave processing circuits, and the convolutional kernel is distributed to a corresponding slave processing circuit and at the same, each slave processing circuit may perform the convolution operation on the corresponding data of the input feature map and the convolutional kernel, and then the master processing circuit may splice operation results returned from a plurality of processing circuits according to the convolutional width folding scheme to get an output feature map obtained by performing the convolution operation on the input feature map and the convolutional kernel. Specifically, a plurality of computing circuits CUs as well as individual caching circuits in a slave processing circuit (please refer to FIG. 5) may be utilized to perform the specific convolution operation. Depending on the space size of the caching circuits within the slave processing circuit and the computing power limitation of the computing circuits, it is usually necessary to perform multiple operation cycles in each round of operation to complete the operation.

In some embodiments, the first caching circuit may be configured to cache an input feature map from the first storage circuit; accordingly, the second caching circuit may be configured to cache a convolutional kernel from the second storage circuit. Each of the computing circuits CU is used to, in each operation cycle, perform an element-wise multiply-accumulate operation on data lines (such as input feature lines) selected from the first caching circuit and data lines (such as weight lines) selected from the second caching circuit, respectively. For simplicity, the following description is directed to the processing within a single slave processing circuit SL, and it may be appreciated that similar processing is performed within other SLs.

As described earlier, a single slave processing circuit may be required to process convolutional kernels with one or more Co values. In some embodiments, operations may be performed in a multi-layer loop according to the dimension order. Where, the innermost loop is determined by the Co value allocated to each slave processing circuit, and the innermost loop number Nco=Aco/Ns. The middle loop is determined by the Kw dimension of the convolutional kernel, and the middle loop number Nkw=min(Kw, Kmax), where Kw is the width dimension size of the convolutional kernel, and Kmax is the maximum width value of the convolutional kernel supported by the slave processing circuit, which is related to the size of the first caching circuit, the folding multiple Ws of the width dimension, and so on. The outer loop is determined by the Kh dimension of the convolutional kernel and the number of sliced blocks Bci according to the Pci in the Ci dimension; the outer loop number Nkh=Kh and Nci=Bci=ceil(Ci/Pci), where Kh is a size of a height dimension of the convolutional kernel. Thus, the total loop number Nloop=Nco*Nkw*Nkh*Nci.

As can be seen from the innermost loop, when multiple Co values need to be processed, the input feature map may be reused. The number of times of input feature map reuse m=Pco/Ns. For example, when Pco=64 and Ns=16, each slave processing circuit processes 4 Co values, and the input feature map is reused rn=64/16=4 times within each slave processing circuit.

In the innermost loop, for each Co value, an output feature map may be computed in parallel by a plurality of computing circuits CUs in a single slave processing circuit. Considering the dimensional order in which the output feature map is stored as well as the W folding of the input feature map, preferably, to simplify the output processing, Ncu output blocks are successively sliced in the Wo dimension to be operated in parallel by Ncu computing circuits, respectively, and each output block corresponds to an operation result of one input feature data line. In some embodiments, Ncu adjacent input feature data lines are selected in sequence from the first caching circuit and distributed to Ncu computing circuits, and a corresponding extended weight data line is selected from the second caching circuit and broadcast to Ncu computing circuits, so that the parallel computation of Ncu output blocks may be realized by reusing the weight data.

FIG. 9 illustrates a schematic method of slicing an output feature map according to an embodiment of the present disclosure. For simplicity, FIG. 9 only shows a slicing method of the output feature map of a Co value in the Wo dimension within the innermost loop. In this example, it is assumed that Ncu=4, four output blocks are sequentially sliced in the Wo dimension, each of which corresponds to an operation result of one input feature data line.

Further, depending on the different data formats within a single data line of the input feature map, different numbers of output points may be included in the output block computed by a single computing circuit CU. Specifically, each output block includes Ws consecutive output points in the width Wo dimension according to the width dimension folding multiple Ws determined earlier. For example, when the Ci of the input feature map is sliced according to the granularity Pci, where Pci=16B, a data line includes 4 Wi, and output points on 4 Wo dimensions may be computed; when the Ci of the input feature map is sliced according to the granularity Pci, where=32B, a data line includes 2 Wi, and output points on 2 Wo dimensions may be computed; and when the Ci of the input feature map is sliced according to the granularity Pci, where Pci=64B, a data line includes 1 Wi, and output points on 1 Wo dimension may be computed. FIG. 9 further illustrates the different composition of a single output block in the above three cases, specifically, a single output block may be composed by 4 Wo output points, 2 Wo output points, or 1 Wo output point.

In order to support a single CU to simultaneously compute one or more Wo output points that may be included in an output block, in some embodiments, the corresponding weight data may be composed as follows: when the convolutional kernel in the second storage circuit is distributed to the second caching circuit of each salve processing circuit, in addition to aligning the Ci dimension of the convolutional kernel to the Pci, a column of input channel data sliced according to the Pci or aligned to the Pci in the Ci dimension is copied and extended into Ws columns according to the width dimension folding multiple Ws to form an extended weight data line, which is stored in the second caching circuit. In other words, a shape of an extended weight data line is Ws*Pci, which may correspond to an input feature data line. As a result, an extended weight data line may be selected from the second caching circuit and broadcast to the Ncu computing circuits of the slave processing circuits. Each of the computing circuits may then perform the element-wise multiply-accumulate operation on one input feature line from the first caching circuit and one extended weight data line from the second caching circuit in units of Pci/M=1/Ws data lines to obtain a partial sum of M/Pci=Ws output points.

It can be seen that two layers of weights are reused in the above operating process. The first layer is between the computing circuits CUs, since the weights are broadcast to Ncu computing circuits, the reusing times is Ncu. The second layer is between one or more Wo output points within each computing circuit, and the weights are extended to compute M/Pci output points within each CU, so the reusing times is M/Pci. As a result, by reusing data as much as possible, the frequent access to data and the amount of data access may be effectively reduced.

In the middle loop in the Kw dimension, input feature data lines and an extended weight data line are selected by sliding synchronously in the width dimension with 1 as the stride in the first caching circuit and the second caching circuit.

As previously mentioned, a sliding number of the middle loop, *i.e.,* the loop number Nkw is equal to min(Kw,Kmax), where Kw is the width dimension of the convolutional kernel, and Kmax is the maximum convolutional kernel width value supported by the slave processing circuits.

In some embodiments, Kmax may be determined as follows:

$$Kmax=L1*Ws-Ncu*Ws+1,$$

where L1 is the size of the first caching circuit in units of data line, Ncu is the number of scheduled computing circuits, and Ws is the folding multiple of the width dimension. For example, in a case that L1=8, in other words, the first caching circuit has 8 data lines and Ncu=4, when Ws=4, Kmax=17; when Ws=2, Kmax=9; when Ws=1, Kmax=5. It can be seen that in most cases, the width of the convolutional kernel, Kw, does not exceed Kmax, so Nkw is equal to Kw.

The outer loop may include a kh dimension and the number of blocks Bci sliced according to Pci in the Ci dimension. The order of loops in two dimensions may be interchanged. In an example, the kh dimension loop may be performed firstly, followed by a Bci loop. In an example, the Bci loop may be performed firstly, followed by the kh dimension loop. Since data in the Kh dimension does not undergo any dimensional folding or slicing, the convolution scheme of the embodiments of the present disclosure may support a convolutional stride of any value in the Kh dimension. A loop at the Bci level is set in the outer loop, which is beneficial for fully reusing the loaded data in the inner loop without frequently updating the caching circuit.

It can be understood that when the width size of the convolutional kernel exceeds Kmax, the convolutional kernel is required to be sliced in the Kw dimension according to this maximum convolutional kernel width value. In this case, in addition to the three-layer loop mentioned above, the loop is further processed according to the slice of Kw.

It is also understood that when the size of the Wo dimension of the output feature map exceeds the amount of data involved in a single computation, for example, Wo>Ncu*Ws, Wo may be looped according to the slicing of Ncu*Ws. Similarly, Ho and Co are also sliced and processed in a loop as needed. That is, additionally, processing may be performed in the order of Wo->Ho->Co in turn through loops, where Co is sliced according to 64.

When the slave processing circuit writes an operation result of the computing circuit, an operation result of each computing circuit may be stored in the third caching circuit as shown in FIG. 5 in the order of Wo dimension first and Co dimension later. When outputting the output points of the computing circuits in the slave processing circuit, the slave processing circuit may output the output points computed by a plurality of computing circuits in a specific sequence according to the slicing method of the output points, so that consecutively outputted output points are continuous in the Co dimension, facilitating subsequent processing. For example, when the slave processing circuit outputs output points of each computing circuit, it may output in the order of the Co dimension first and then the Wo dimension.

It can also be seen from the previous operating process that Ncu*Ws output points on the Wo dimension of the output feature map are computed each time, in other words, the output points will be aligned to Ncu*Ws, so there may be redundant output points. In a data path that stores the operation results, the redundant output points on these Wo dimensions may be filtered out.

Furthermore, on a data path for storing the operation results, it is also possible to filter out the superfluous output points on the Co dimension that result from the alignment operation. In some examples, the above filtering operation may be controlled and executed by the master processing circuit. For example, the master processing circuit may read output results from the third caching circuit of each slave processing circuit, filter out redundant output points, and then write the output results into the first storage circuit. In other examples, the slave processing circuits may also control the output results from the third caching circuit, filter out redundant output points, and then transmit the output results on a data path to the first storage circuit for storage.

Optionally or additionally, during the transmission process from the third caching circuit to the first storage circuit, different data reading and writing schemes may be used for operation results. These reading and writing schemes may, for example, refer to the reading and writing schemes for the input feature map mentioned earlier. The following is only a brief description. For a detailed description, please refer to the previous text. In some embodiments, a writing scheme of the operation results may be implemented in a last step of writing to the first storage circuit. In other words, the writing scheme of the operation results may be executed on the data path for storing the operation results after the dimension conversion, filling data and filtering out on the operation results have been performed. Those skilled in the art may understand that the order of these processes may also be adjusted, which is not limited in the embodiments of the present disclosure.

In some embodiments, in order to improve transmission and writing efficiency, the Co dimension of the output feature map may be sliced according to an output channel slice granularity Pco; and by combining the data of each slice granularity with the data of Wso times of the width dimension, an output feature data line is formed for transmission, where Pco*Wso=M. The output channel slicing granularity Pco may be determined similarly by referring to the previous input channel slicing granularity Pci, which will not be described in detail here. Thus, similarly, in these embodiments, depending on the number of sliced blocks in the Co dimension, continuous writing or interleaved (non-continuous) writing may be adopted to save the operation results to the storage circuit. Please note that the "continuous" or "interleaved" in the present disclosure refers to whether the data is continuous or interleaved in terms of storage addresses.

In an example, when the number of sliced blocks along the Co dimension is 1, which means that the Co dimension has not been sliced, Co≤Pco, in this case, a single W contains only one sliced block of size Co. When storing the operation results, output feature map data of size Co*Wso may be read from an operation result of the third caching circuit. At this time, when these Wso Ws are stored, these Ws are continuous. Therefore, in this case, these read output feature map data may be continuously written into the first storage circuit. By this way, Wso pieces of data of W may be written at one time through a single write request, thereby simplifying instructions. Of course, Wso pieces of continuous data of W may be written through multiple write requests.

In another example, when the number of sliced blocks in the Co dimension is not 1, in other words, when the Co dimension is sliced into multiple slice granularities Pco, at this time, Co>Pci. Since a data line is composed of Wso*Pco, at this time, data of size Pco on each W needs to be written in the interleaved manner. Further, considering that Co may not be divisible by Pco, the Co dimension may be sliced into an integer part and a remainder part according to the Pco. Then, separate processing may be performed on the integer part and the remainder part.

In one implementation, for the integer part, output feature map data of size Pco*Wso is read from an output operation result each time. The output feature map data may be sliced into Wso output feature map data blocks, and each output feature map data block includes data of size Pco in the Co dimension. It can be understood that considering that a final desired data storage dimension is HoWoCo, therefore, the data in these output feature map data blocks is required to be continuously stored, while the output feature map data blocks are required to be stored in the interleaved manner, and the storage interval is 1*Co(WC), i.e.,, 1 W. Therefore, in this case, the read Wso output feature map data blocks may be written into the first storage circuit in the interleaved manner. Write starting addresses of written output feature map data blocks are sequentially spaced by Co. That is, each time, a data volume of Pco is required to be written, and it is required to be written Wso times. In other words, the data volume of Pco is written Wso times, and each time, a data volume of Pco on one W is written at equal intervals. At this time, data writing may be implemented through Wso write requests. Through each write request, the data volume of Pco is written on the corresponding W, respectively.

In another implementation, for the remainder part, output feature map data of size Co_rem*Wso is read from the output operation results each time. The output feature map data may also be sliced into Wso output feature map data blocks. Each output feature map data block includes data of size Co_rem in the Co dimension, where Co_rem represents a remainder obtained when Co is divided by Pco. It can be understood that usually the remainder part is at the end of the integer part. Similarly, the read Wso output feature map data blocks may be written into the first storage circuit at intervals. The write starting addresses of each written output feature map data block are sequentially spaced by Co. That is, each time, a data volume of Co_rem is required to be written, and it is required to be written Wso times. In other words, the data volume of Co_rem is written Wso times, and each time, a data volume of Co_rem on one W is written at equal intervals. At this time, data writing may be implemented through Wso write requests. Through each write request, the data volume of Pco is written on the corresponding W, respectively. It can be seen that the interleaved writing processing of the remainder part is similar to that of the integer part, except that the written data volume is slightly different.

Through the above interleaved writing method, the write bandwidth may be fully utilized each time writing is performed, and the written data may maintain a continuous storage order in the Co dimension in the storage circuit.

In the above embodiments, each slave processing circuit may control reading methods of weight data lines and input feature map data lines according to the weight reuse and/or input feature map reuse method, so as to traverse an entire convolution window of convolutional output points through multiple operations, and then perform element-wise multiply-accumulate operations on the weight data and input feature map data, thereby obtaining a plurality of partial sum results and accumulating them to obtain a convolutional output at a corresponding convolutional output point.

The following describes the detailed operating process of the convolution operation in different scenarios of the present disclosure in combination with several specific embodiments.

**Embodiment 1: Ci is aligned to 16B, the number of sliced blocks Bci=1, and Co is aligned to 64.**

In this embodiment, Ci is aligned into 16B, so a format of one input feature data line is 4×16B (WiCi). Therefore, an output block computed by a computing circuit includes 1×4 (CoWo) output points. When Co is aligned to 64, in the case where Ns=16 slave processing circuits may be scheduled, each slave processing circuit processes 4 Co values. It is assumed that the size of a convolutional kernel is KhKw=3×3.

FIG. 10a-FIG.10d illustrate schematic diagrams of an operating process of the convolution operation scheme according to the embodiment 1 the present disclosure. In this example, the size of the first caching circuit is 8×64B, that is, at most 8 lines of data may be cached. The figure shows that each line of data includes 4 columns of Wi data. The size of the second caching circuit is 9×64B, that is, at most 9 lines of data may be cached.

FIG. 10a shows an operation process of input feature map reuse in the innermost Co loop for a loop for Kh=0 and Kw=0. According to the method corresponding to the slicing method of the output blocks, Ncu input feature lines are selected from the first caching circuit and sent to Ncu computing circuits for computing. During the subsequent Aco/Ns = 4 computation periods, these NCU input feature lines are reused four times each in the NCU computing circuits.

During these four computation periods, weight lines corresponding to different Co values are selected from the second caching circuit and broadcast to the NCU computing circuits in the slave processing circuit, where each weight line is extended by copying 1/4 weight line three times. For example, for the example in the figure, it is assumed that the slave processing circuit is SL0, which processes four convolutional kernels of Co=0, 16, 32, and 48.

In a first computation period indicated by an arrow ① , 16B*4 data copied from the 16B (Ci dimension) data of Kw=0 corresponding to a convolutional kernel of Co=0 in a 0th line of the second caching circuit are broadcast to the 4 CUs to perform element-wise multiply-accumulate operations with the input feature lines received by each CU respectively. It should be noted that since each input feature line at this time includes four Wis, and the weight is copied four times, the element-wise multiply-accumulate operation is performed according to 1/4 data line, thereby obtaining four output points of Co=0. Specifically, the computing circuit CU0 computes output points w0, w1, w2, and w3; and the computing circuit CU1 computes output points w4, w5, w6, and w7, and so on. It can be understood that these computed output points are all partial sums, and only data in the Ci dimension, when Kh=0 and Kw=0, the partial sums are accumulated.

In a second computation period indicated by an arrow ②, 16B*4 data copied from the 16B (Ci dimension) data of Kw=0 corresponding to a convolutional kernel of Co=16 in a first line of the second caching circuit are broadcast to the 4 CUs to perform element-wise multiply-accumulate operations with the input feature lines received by each CU respectively. It should be noted that since each input feature line at this time includes 4 Wis, and the weight is copied four times, the element-wise multiply-accumulate operation is performed according to 1/4 data line, thereby obtaining four output points of Co=16. Specifically, the computing circuit CU0 computes the output points w0, w1, w2, and w3; the computing circuit CU1 computes the output points w4, w5, w6, and w7, and so on.

Similarly, in a third computation period indicated by an arrow (3), the four CUs compute 16 output points in the Wo dimension of Co=32; and in a fourth computation period indicated by an arrow ®, the four CUs compute 16 output points in the Wo dimension of Co=48, and no further description will be given herein. Thus, four Co values processed by a single slave processing circuit are processed in turn in a loop to obtain 16 output points in the Wo dimension of each of the four Cos. In an operation of each CU, the input feature line is reused four times. In an operation of a single slave processing circuit, the weight is reused Ncu*M/Pci=4*(64/16)=16 times.

After the innermost Co loop is processed, an intermediate Kw loop may be carried out next.

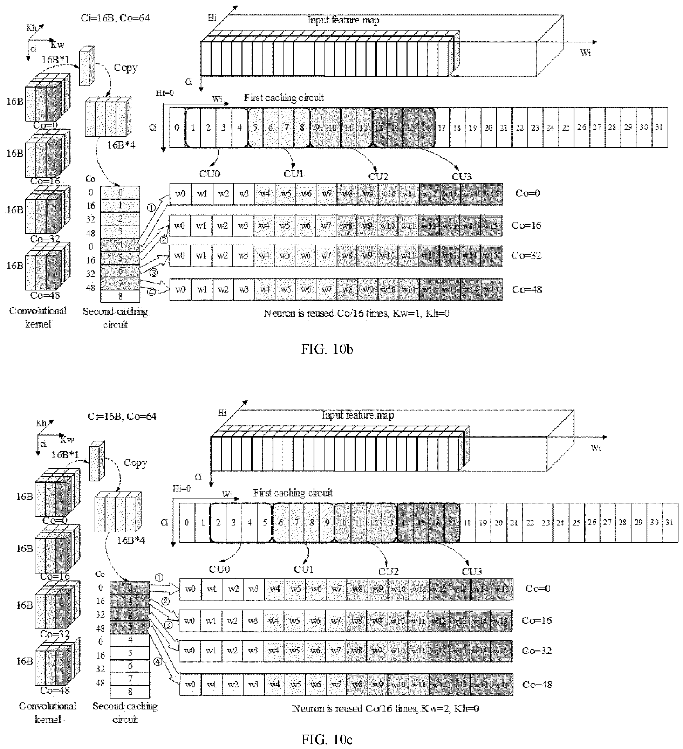

FIG. 10b shows the loop processing when Kh=0, and Kw=1. At this time, for Kw=1, a same operation of the Co loop and input feature map reuse similar to FIG. 10a may be performed. The difference lies in the selection of data participating in the operation: at this point, 4 corresponding input feature lines are selected by sliding one stride in the Wi dimension from the first caching circuit and transmitted to four computing circuits respectively; and weight data of Kh=0 and Kw=1 corresponding to different Co values are selected from the second caching circuit in sequence. During subsequent four computation periods, these four input feature lines are reused four times each in the four computing circuits. Each time, the four input feature lines are operated with extended weight lines of different Co values.

For example, in a first computation period indicated by an arrow ①, 16B*4 data copied from the 16B (Ci dimension) data of Kw=1 corresponding to a convolutional kernel of Co=0 in a fourth line of the second caching circuit are broadcast to the 4 CUs to perform element-wise multiply-accumulate operations with the input feature lines received by each CU respectively. It can be understood that these computed output points are all partial sums, and only data in the Ci dimension, when Kh=0 and Kw=1, are accumulated. It can also be understood that since the input feature line has slid one stride in the Wi dimension and the weight Kw has also slid one stride in the W dimension (Kw=1), these partial sum results still belong to the 16 output points w0~w15 in the Wo dimension of Co=0. Therefore, a partial sum obtained from this operation is accumulated on the partial sum obtained from the previous operation (FIG. 10a).

Similarly, in a second computation period indicated by an arrow ②, the 4 CUs compute partial sums of the 16 output points in the Wo dimension of Co=16 and accumulate them on the partial sums obtained from the operations in the corresponding computations of FIG. 10a. In a third computation period indicated by an arrow (3), the 4 CUs compute partial sums of the 16 output points in the Wo dimension of Co=32 and accumulate them; and in a third computation period indicated by an arrow ④, the 4 CUs compute partial sums of the 16 output points in the Wo dimension of Co=48 and accumulate them, and no further description will be given herein.

Thus, Kw in the middle layer enters a next loop, that is, Kw=2.

FIG. 10c illustrates the loop processing when Kh=0, and Kw=2. At this time, for Kw=2, a same operation of the Co loop and input feature map reuse similar to FIG. 10a and FIG. 10b may be performed. The difference lies in the selection of data participating in the operation: at this point, 4 corresponding input feature lines are selected by sliding one stride again in the Wi dimension from the first caching circuit and transmitted to four computing circuits respectively; and weight data of Kh=0 and Kw=2 corresponding to different Co values are selected from the second caching circuit in sequence. As can be seen from the figure, due to the limited caching space of the second caching circuit, data will be loaded in a loop. Data of Kw=2 is placed in lines 0 to 3, overwriting original weight data of Kw=0. It can be understood that the size of the caching circuit is not limited to the illustrated example, and a corresponding storage order is also not limited to the illustrated situation. Those skilled in the art may make adaptive adjustment and using according to the actually used hardware.

In the illustration, the partial sum results of the four computations are correspondingly accumulated onto the previous accumulation result. The operation process is similar to the previous one and will not be repeated herein.

Thus, after the Kw loop in the middle layer is processed, the Kh loop in the outer layer may be carried out next. In this example, since the number of sliced blocks in the Ci dimension is 1, there is no need to perform a loop of sliced blocks in the Ci dimension.

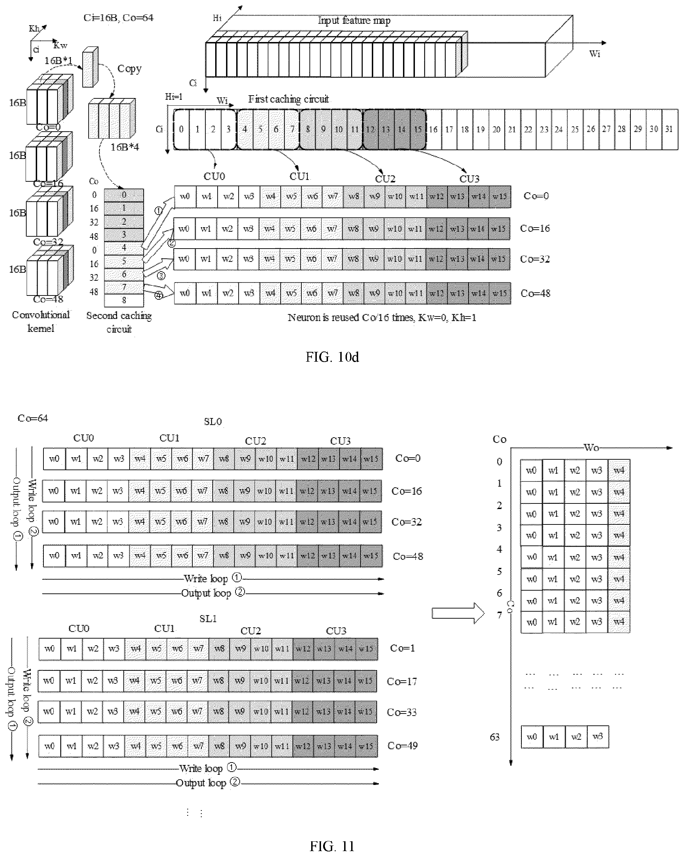

FIG. 10d shows the loop processing when Kh=1, and Kw=0. At this time, for Kh=1, a same operation of the Co loop and input feature map reuse similar to FIG. 10a may be performed. The difference lies in the selection of data participating in the operation: at this time, input feature data in the first caching circuit are updated to feature lines corresponding to Hi=1, and 4 corresponding input feature lines are selected starting from a first line and sent to the four computing circuits, respectively; and weight data of Kh=1 and Kw=0 corresponding to different Co values are selected from the second caching circuit in sequence.

For example, in a first computation period indicated by an arrow ①, 16B*4 data copied from the 16B (Ci dimension) data of Kh=1 and Kw=0 corresponding to a convolutional kernel of Co=0 in a fourth line of the second caching circuit are broadcast to the 4 CUs to perform element-wise multiply-accumulate operations with the input feature lines received by each CU respectively. It can be understood that these computed output points are all partial sums, and only data in the Ci dimension, when Kh=1 and Kw=0, are accumulated. It can also be understood that since the Hi of the input feature line is 1 and the weight Kh is 1, these partial sum results still belong to the 16 output points w0~w15 in the Wo dimension of Co=0. Therefore, a partial sum obtained from this operation is accumulated on the partial sum obtained from the previous operation (FIG. 10c). The other computation cycles are similar and will not be repeated.

Thus, after the Kh loop in the outer layer is also processed, each computing circuit may accumulate to obtain final convolutional results of four output points for each of the four Cos. Four computing circuits of one slave processing circuit obtain 4*4=16 output points from each of the four Cos. 16 slave processing circuit obtain 16*4=64 Cos in total, where 16 output points are from each Co.

It can be understood that, limited by the sizes of the first caching circuit and the second caching circuit, when Kw exceeds a certain value, it is necessary to traverse in the Kw dimension and switch the inputs and weights at the same time until the complete output is computed. In addition, when the size of the output feature map exceeds an amount that may be processed in one computation, the output feature map may be processed in a loop according to an order of Wo->Ho->Co, where Co is sliced according to 64. Those skilled in the art may similarly deduce its computation process according to the foregoing description, and it will not be repeated herein.

FIG. 11 illustrates a schematic diagram of the logic for writing and outputting an operation result according to the embodiment 1 of the present disclosure.

As shown in the figure, a plurality of computing circuits CUs in a single slave processing circuit SLs may write the operation results into a result caching circuit (such as the third caching circuit in FIG. 5) according to the operation order. Specifically, output points of a same Co computed by each CU may be written (a write loop ①) according to the order of Wo. Then, output points of different Cos computed by each CU may be written (a write loop ②) according to the order of Co. For example, w0~w15 when Co=0 are written first, followed by w0~w15 when Co=16, then w0~w15 when Co=32, and finally w0~w15 when Co=48 are written. Similar result writing is performed in other SLs, but processed Co values are different.

As can be seen from the above writing sequence, the operation results in the result caching circuit are stored in an order of CW (W is in the lowest storage dimension). However, the final output results are expected to be stored in the HWC storage order (C is in the lowest storage dimension). Therefore, on the data path for reading the result from the result caching circuit, the data may be converted from the CW order to the WC order.

More specifically, as shown in the figure, firstly, a first output point w0 in the W dimension may be read out from a result caching circuit of each salve processing circuit in sequence in the order of Co (a read loop ①). Then, following the order of Wo, output points on each Wo may be read out (a read loop ②). A right side view in FIG. 11 illustrates a readout result. It should be noted that when the output points are read in the Co order, the output points are read from result caching circuits of the 16 SLs in turn to make the Co dimension continuous, for example, CO=0~63.

From the above operation process, it can be seen that since the adjacent W dimension is used to compensate for the deficiency of the Ci dimension, there is no need to use software to perform additional data arrangement processing on the input feature maps and convolutional kernels, simplifying the processing process and instruction overhead. Further, it can also be seen from the format of the output data that since the data is converted from the CW order to the WC order on the data path for reading out the data, there is no need to use software to perform additional data arrangement processing on the output feature maps, avoiding complex software parameter configurations. In addition, it can be seen from the loop process of the operation that since the output feature maps are only sliced in the Wo dimension, convolutional strides of any size in the H dimension may be supported.

**Embodiment 2: Ci is aligned to 32B, the number of sliced blocks Bci=1, and Co is aligned to 32.**

In this embodiment, Ci is aligned into 32B, so a format of one input feature data line is 2×32B (WiCi). Therefore, an output block computed by a computing circuit includes 1×2 (CoWo) output points. When Co is aligned to 32, in the case where Ns=16 slave processing circuits may be scheduled, each slave processing circuit processes two Co values. It is assumed that the size of a convolutional kernel is KhKw=3×3.

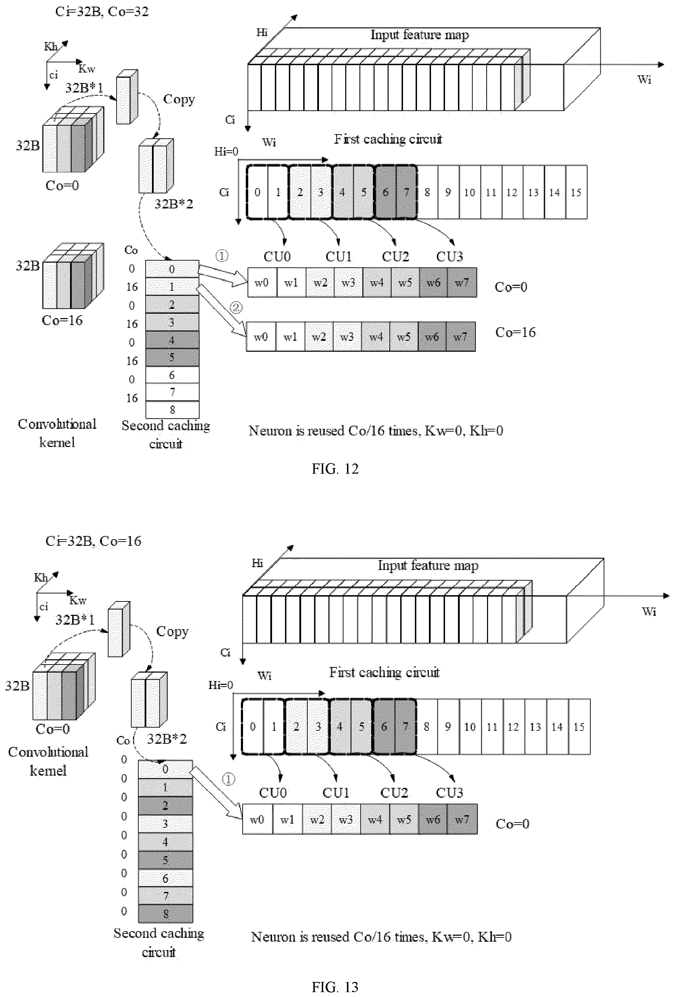

FIG. 12 illustrates a schematic diagram of an operating process of the convolution operation scheme according to the embodiment 2 of the present disclosure. In this example, the first caching circuit and the second caching circuit are configured the same as in the embodiment 1.

The figure shows the operation of the innermost Co loop and input feature map reuse in the loop for Kh=0 and Kw=0. According to the method corresponding to the slicing method of the output blocks, 4 input feature lines are selected from the first caching circuit and transmitted to 4 computing circuits for computing. During subsequent Aco/Ns=2 computation periods, these four input feature lines are reused twice in each of the four computing circuits.

During these two computation periods, weight lines corresponding to different Co values are selected from the second caching circuit and broadcast to the four computing circuits in the slave processing circuit respectively, where each weight line is extended by copying 1/2 weight line. For example, for the example in the figure, it is assumed that the slave processing circuit is SL0, which processes two convolutional kernels of Co=0 and 16.

In a first computation period indicated by an arrow ① , 32B*2 data copied from the 32B (Ci dimension) data of Kw=0 corresponding to a convolutional kernel of Co=0 in a 0th line of the second caching circuit are broadcast to the 4 CUs to perform element-wise multiply-accumulate operations with the input feature lines received by each CU respectively. It should be noted since each input feature line at this time includes two Wis, and the weight is copied two times, the element-wise multiply-accumulate operation is performed according to 1/2 data line, thereby obtaining two output points of Co=0. Specifically, the computing circuit CU0 computes output points w0 and w1; and the computing circuit CU1 computes output points w2 and w3, and so on. It can be understood that these computed output points are all partial sums, and only data in the Ci dimension, when Kh=0 and Kw=0, are accumulated.

Similarly, in a second computation period indicated by an arrow ②, the four CUs compute 8 output points in the Wo dimension of Co=16, and no further description will be given herein. Thus, two Co values processed by a single slave processing circuit are processed in turn in a loop to obtain eight output points in the Wo dimension of each of the two Cos. In an operation of each CU, the input feature line is reused twice. In an operation of a single slave processing circuit, the weight is reused Ncu*M/Pci=4*(64/32)=8 times.

After the innermost Co loop is processed, an intermediate Kw loop may be carried out next, and then the outer Kh loop. The loop process may refer to the embodiment 1 and will not be repeated herein.

## Embodiment 3: Ci is aligned to 32B, the number of sliced blocks Bci=1, and Co is aligned to 16.

In this embodiment, Ci is aligned into 32B, so a format of one input feature data line is $2\times32B$ (WiCi). Therefore, an output block computed by a computing circuit includes $1\times2$ (CoWo) output points. When Co is aligned to 16, in the case where Ns=16 slave processing circuits may be scheduled, each slave processing circuit processes one Co value. It is assumed that the size of a convolutional kernel is KhKw=$3\times3$.

FIG. 13 illustrates a schematic diagram of an operating process of the convolution operation scheme according to the embodiment 3 of the present disclosure. In this example, the first caching circuit and the second caching circuit are configured the same as in the embodiment 1 and the embodiment 2.

The figure shows the operation of the innermost Co loop and input feature map reuse in the loop for Kh=0 and Kw=0. According to the method corresponding to the slicing method of the output blocks, 4 input feature lines are selected from the first caching circuit and transmitted to 4 computing circuits for computing. During subsequent Aco/Ns = 1 computation period, these four input feature lines are used once in each of the four computing circuits, that is, there is no reuse.

For the example in the figure, it is assumed that the slave processing circuit is SL0, which processes one convolutional kernel of Co=0.

In a first computation period indicated by an arrow ① , 32B*2 data copied from the 32B (Ci dimension) data of Kw=0 corresponding to a convolutional kernel of Co=0 in a 0th line of the second caching circuit are broadcast to the 4 CUs to perform element-wise multiply-accumulate operations with the input feature lines received by each CU respectively. It should be noted that since each input feature line at this time includes two Wis, and the weight is copied twice, the element-wise multiply-accumulate operation is performed according to 1/2 data line, thereby obtaining two output points of Co=0. Specifically, the computing circuit CU0 computes output points w0 and w1; and the computing circuit CU1 computes output points w2 and w3, and so on. It can be understood that these computed output points are all partial sums, and only data in the Ci dimension, when Kh=0 and Kw=0, are accumulated.

Thus, for one Co value processed by a single slave processing circuit, eight output points in the Wo dimension of this Co may be obtained through a single computation. In an operation of each CU, the input feature line is used once. In an operation of a single slave processing circuit, the weight is reused Ncu*M/Pci4*(64/32)=8 times.

After the innermost Co loop is processed, an intermediate Kw loop may be carried out next, and then the outer Kh loop. The loop process may refer to the embodiment 1 and will not be repeated herein.

## Embodiment 4: Ci is aligned to 64B, the number of sliced blocks Bci=1, and Co is aligned to 32.

In this embodiment, Ci is aligned into 64B, so a format of one input feature data line is $1\times64B$ (WiCi). Therefore, an output block computed by a computing circuit includes $1\times1$ (CoWo) output point. When Co is aligned to 32, in the case where Ns=16 slave processing circuits may be scheduled, each slave processing circuit processes two Co values. It is assumed that the size of a convolutional kernel is KhKw=$3\times3$.

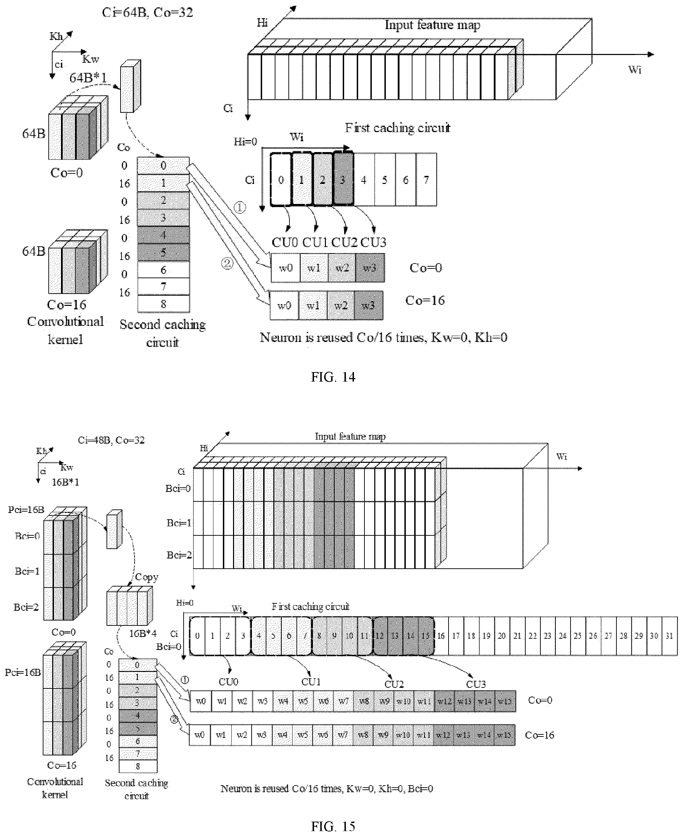

FIG. 14 illustrates a schematic diagram of an operating process of the convolution operation scheme according to the embodiment 4 of the present disclosure. In this example, the first caching circuit and the second caching circuit are configured the same as in the embodiment 1, the embodiment 2 and the embodiment 3.

The figure shows the operation of the innermost Co loop and input feature map reuse in the loop for Kh=0 and Kw=0. According to the method corresponding to the slicing method of the output blocks, 4 input feature lines are selected from the first caching circuit and transmitted to 4 computing circuits for computing. During subsequent Aco/Ns=2 computation periods, these four input feature lines are reused twice in each of the four computing circuits.

During these two computation periods, weight lines corresponding to different Co values are selected from the second caching circuit and broadcast to the four computing circuits in the slave processing circuit respectively, where each weight line directly corresponds to an original weight line and does not need to be copied and extended. For the example in the figure, it is assumed that the slave processing circuit is SL0, which processes two convolutional kernels of Co=0 and 16.

In a first computation period indicated by an arrow ① , 64B (Ci dimension) data of Kw=0 corresponding to a convolutional kernel of Co=0 in a 0th line of the second caching circuit are broadcast to the 4 CUs to perform element-wise multiply-accumulate operations with the input feature lines received by each CU respectively. It should be noted that since each input feature line at this time includes one Wi, and there is only one copy of the weight, the element-wise multiply-accumulate operation is performed according to one data line, thereby obtaining one output point of Co=0. Specifically, the computing circuit CU0 computes the output point w0; and the computing circuit CU1 computes the output point w1, and so on. It can be understood that these computed output points are all partial sums, and only data in the Ci dimension, when Kh=0 and Kw=0, are accumulated.

Similarly, in a second computation period indicated by an arrow ②, the four CUs compute four output points in the Wo dimension of Co=16, and no further description will be given herein. Thus, two Co values processed by a single slave processing circuit are processed in turn in a loop to obtain four output points in the Wo dimension of each of the two Cos. In an operation of each CU, the input feature line is reused twice. In an operation of a single slave processing circuit, the weight is reused Ncu*M/Pci=4*(64/64)=4 times.

After the innermost Co loop is processed, an intermediate Kw loop may be carried out next, and then the outer Kh loop. The loop process may refer to the embodiment 1 and will not be repeated herein.

### Embodiment 5: Ci is aligned to 16B, the number of sliced blocks Bci = 3, and Co is aligned to 32.

Unlike the previous embodiments, in this embodiment, there are multiple sliced blocks in the Ci dimension. Specifically, Ci = 48B, and the slicing granularity Pci=16B, so there are three sliced blocks. Therefore, in the loop computation, there is an additional loop at a sliced block level in the outer loop.

At this point, a format of one input feature data line is $4 \times 16B$ (WiCi), so that an output block computed by a computing circuit includes $1 \times 4$ (CoWo) output points. When Co is aligned to 32, in the case where Ns=16 slave processing circuits may be scheduled, each slave processing circuit processes two Co values. It is assumed that the size of a convolutional kernel is KhKw=$3 \times 3$.

FIG. 15 illustrates a schematic diagram of an operating process of the convolution operation scheme according to the embodiment 5 of the present disclosure. In this example, the first caching circuit and the second caching circuit are configured the same as in the embodiment 1, the embodiment 2, the embodiment 3, and the embodiment 4.

The figure shows the operation of the innermost Co loop and input feature map reuse in the loop for Bci=0, Kh=0, and Kw=0. According to the method corresponding to the slicing method of the output blocks, 4 input feature lines are selected from the first caching circuit and transmitted to 4 computing circuits for computing. These input feature lines correspond to data of Hi=0, Bci=0, and Wi=0-15 in an input feature map. During subsequent Aco/Ns=2 computation periods, these four input feature lines are reused twice in each of the four computing circuits.

During these two computation periods, weight lines corresponding to different Co values are selected from the second caching circuit and broadcast to the four computing circuits in the slave processing circuit respectively, where each weight line is extended by copying 1/4 weight line three times, and this 1/4 weight line is obtained by slicing in the Ci dimension according to the granularity Pci=16B. For example, for the example in the figure, it is assumed that the slave processing circuit is SL0, which processes two convolutional kernels of Co=0 and 16. Data with Kw=0, Kh=0, and Bci=0 in each convolutional kernel is fetched for copying and extension.

In a first computation period indicated by an arrow ① , 16B*4 data copied from the 16B (Ci dimension) data of Kw=0 corresponding to a convolutional kernel of Co=0 in a 0th line of the second caching circuit are broadcast to the 4 CUs to perform element-wise multiply-accumulate operations with the input feature lines received by each CU respectively. It should be noted that since each input feature line at this time includes four Wis, and the weight is copied four times, the element-wise multiply-accumulate operation is performed according to 1/4 data line, thereby obtaining one output point of Co=0. Specifically, the computing circuit CU0 computes the output point w0; and the computing circuit CU1 computes the output point w1, and so on. It can be understood that these computed output points are all partial sums, and only data of Kh=0, Kw=0, and Bci=0 are accumulated.

Similarly, in a second computation period indicated by an arrow ②, the four CUs compute 16 output points in the Wo dimension of Co=16, and no further description will be given herein. Thus, two Co values processed by a single slave processing circuit are processed in turn in a loop to obtain 16 output points in the Wo dimension of each of the two Cos. In an operation of each CU, the input feature line is reused twice. In an operation of a single slave processing circuit, the weight is reused Ncu*M/Pci=4*(64/16)=16 times.

After the innermost Co loop is processed, an intermediate Kw loop may be carried out next, and then the outer Kh loop and Bci loop. The Kw loop and Kh loop may refer to the embodiment 1 and will not be repeated herein.

For the Bci loop, in one implementation, the data in the first caching circuit and the second caching circuit may be updated after the Kw loop. For example, after an operation on a data block of Bci=0 is completed, a data block of Bci=1 is loaded, and the loop is also performed in the Kw and Co dimensions. In each computation, results obtained are still partial sums corresponding to the output points, so they may be accumulated onto the previous partial sum results. In another implementation, the data in the first caching circuit and the second caching circuit may be updated after the Kh loop. The operation process is similar to the above and will not be described in detail herein.

### Embodiment 6: an example of non-continuous writing of operation results.

In this example, the processing performed on the operation results on the data path from the third caching circuit to the first storage circuit is described. In this example, it is assumed that an original output channel Co=47, which is aligned to 48 during the operation, and an output Wo=16.

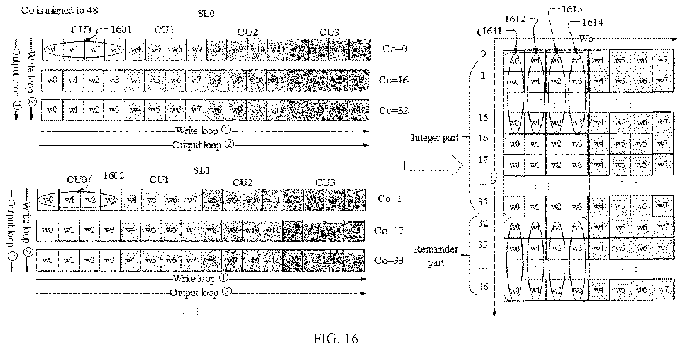

FIG. 16 illustrates a schematic diagram of the logic for writing and outputting an operation result according to an embodiment of the present disclosure.

As shown in the figure and previously described, a plurality of computing circuits CUs in a single slave processing circuit SL may write the operation results into a result caching circuit (such as the third caching circuit in FIG. 5) according to the operation order. Specifically, output points of a same Co computed by each CU may be written according to the order of Wo (the write loop ①). Then, output points of different Cos computed by each CU may be written according to the order of Co (the write loop ②).

On a data path for reading the results from the result caching circuit, the data may be converted from the CW order to the WC order.

In addition, output points that are redundantly computed due to alignment in the Co dimension may also be filtered out. For example, the computation of SL15 for Co=47 is a redundant computation for alignment, so an obtained result may be filtered out.

Furthermore, as mentioned previously, in order to improve the transmission and writing efficiency, the Co dimension of the output feature map may be sliced according to the output channel slice granularity Pco, and data of each slice granularity is combined with data of the width dimension of Wso times to form output feature data lines for transmission, where Pco*Wso=M.

In this example, since Co=47B (assuming int8 data type), Pco=16B may be selected for slicing, thereby maximizing the utilization of the transmission bandwidth. According to the Pco, the number of sliced blocks in the Co dimension may be determined to be 3. In addition, since Co is not divisible by Pco, it may be sliced into an integer part (Co=0~31) and a remainder part (Co=32~46).

For the integer part, as shown in the figure, output feature map data of size Pco*Wso=16B*4 may be read from an operation result each time. That is, the output feature map data of size Pco*Wso=16B*4 may be read from the result caching circuits of the 16 SLs in turn according to the Co order. Specifically, four output points w0, w1, w2, and w3 (as shown in an elliptical frame 1601) in the Wo dimension when Co=0 are read from the SL0; four output points w0, w1, w2, and w3 (as shown in an elliptical frame 1602) in the Wo dimension when Co=1 are read from the SL1, and so on, until four output points w0, w1, w2, and w3 (not shown) in the Wo dimension when Co=15 are read from the SL15.

These read out output feature map data may be sliced into Wso output feature map data blocks, and each output feature map data block includes data with a size of Pco=16B in the Co dimension. Specifically, as shown in the figure, read out 16*4 output feature map data may be sliced into 4 output feature map data blocks (1611-1614) according to the Wo dimension, and each output feature map data block includes data with a size of 16B in the Co dimension. In order to obtain the desired data storage dimension HoWoCo, data within these output feature map data blocks are required to be stored continuously, while the output feature map data blocks are required to be stored in the interleaved manner, where the storage interval is 1*Co (WC), i.e., 1 W. In this example, the storage interval is 47B. Thus, in this case, the four read out output feature map data blocks may be written into the first storage circuit in the interleaved manner, and the write starting addresses of written output feature map data blocks are successively spaced by Co. That is, each time, a data volume of 16B is required to be written, and it is required to be written four times.

For a second data line in the integer part, processing may be performed in a similar manner.

For the remainder part, i.e., the data of Co=32-46, output feature map data of size Co_rem*Wso is read from the operation result. It can be understood that redundant computations due to alignment in the Co dimension may either not be read directly during the reading from the third caching circuit or be discarded after being read. The embodiments of the present disclosure have no restrictions in this regard. In this example, Co_rem=15B. These output feature map data of the remainder part may also be sliced into Wso output feature map data blocks, and each output feature map data block includes data of size Co_rem in the Co dimension. As shown in the figure, the remainder part is at the end of the integer part. Similarly, the read Wso output feature map data blocks may be written into the first storage circuit at intervals. The write starting addresses of written output feature map data blocks are sequentially spaced by Co. In this example, a data volume of 15B is written each time, and it is required to be written four times.

Then, similar processing may be performed for the rest of the data in the Wo dimension, which will not be repeated herein.

The convolutional optimization scheme provided by the present disclosure is described and illustrated by the above specific convolutional operation process in combination with six embodiments. It will be appreciated that depending on the different values of Ci and Co, there are many more combinations to obtain different embodiments. In addition, based on the teachings of the present disclosure, those skilled in the art may envision other convolutional optimization schemes based on specific hardware circuit configurations (e.g., the number of slave processing circuits, the number of computing circuits within the slave processing circuits, and the one-shot processing capability of the hardware), which fall within the scope of the present disclosure and will not be enumerated herein.

An embodiment of the present disclosure provides a method for performing the convolution operation using the computing apparatus. Those skilled in the art may understand that method steps for performing the convolution operation correspond to the various circuits of the computing apparatus described above in conjunction with the drawings, so that the features described above are also applicable to the method steps and will not be repeated herein.

The embodiment of the present disclosure also provides a chip including the computing apparatus of any embodiment described in conjunction with the drawings. Further, the present disclosure also provides a board card including the above-mentioned chip.

According to different application scenarios, the electronic device or apparatus of the present disclosure may include a server, a cloud server, a server cluster, a data processing apparatus, a robot, a computer, a printer, a scanner, a tablet, a smart terminal, a PC device, an Internet of Things terminal, a mobile terminal, a mobile phone, a traffic recorder, a navigator, a sensor, a webcam, a camera, a video camera, a projector, a watch, a headphone, a mobile storage, a wearable device, a visual terminal, an autonomous driving terminal, a vehicle, a household appliance, and/or a medical device. The vehicle includes an airplane, a ship, and/or a car; the household appliance may include a television, an air conditioner, a microwave oven, a refrigerator, an electric rice cooker, a humidifier, a washing machine, an electric lamp, a gas cooker, and a range hood; and the medical device may include a nuclear magnetic resonance spectrometer, a B-ultrasonic scanner, and/or an electrocardiograph. The electronic device or apparatus of the present disclosure may be further applied to Internet, Internet of Things, data center, energy, transportation, public management, manufacturing, education, power grid, telecommunications, finance, retail, construction sites, medical, and other fields. Further, the electronic device or apparatus of the present disclosure may be used in application circumstances including cloud, edge, and terminal related to artificial intelligence, big data, and/or cloud computing. In one or a plurality of embodiments, according to the solution of the present disclosure, an electronic device or apparatus with high computing power may be applied to a cloud device (such as the cloud server), while an electronic device or apparatus with low power consumption may be applied to a terminal device and/or an edge device (such as a smart phone or the webcam). In one or a plurality of embodiments, hardware information of the cloud device is compatible with that of the terminal device and/or the edge device. As such, according to the hardware information of the terminal device and/or the edge device, appropriate hardware resources may be matched from hardware resources of the cloud device to simulate hardware resources of the terminal device and/or the edge device, so as to complete unified management, scheduling, and collaborative work of terminal-cloud integration or cloud-edge-terminal integration.

It is required to be explained that for the sake of brevity, the present disclosure describes some method embodiments as a series of actions and combinations thereof, but those skilled in the art may understand that the solution of the present disclosure is not limited by an order of actions described. Therefore, according to the present disclosure or under the teaching of the present disclosure, those skilled in the art may understand that some steps of the method embodiments may be executed in other orders or simultaneously. Further, those skilled in the art may understand that the embodiments described in the present disclosure may be regarded as optional embodiments; in other words, actions and modules involved thereof are not necessarily required for the implementation of a certain solution or some solutions of the present disclosure. Additionally, according to different solutions, descriptions of some embodiments of the present disclosure have their own emphases. In view of this, those skilled in the art may understand that for parts that are not described in detail in a certain embodiment of the present disclosure, reference may be made to related descriptions in other embodiments.

For specific implementations, according to the present disclosure and under the teaching of the present disclosure, those skilled in the art may understand that several embodiments disclosed in the present disclosure may be implemented through other methods that are not disclosed in the present disclosure. For example, for units in the electronic device or apparatus embodiment mentioned above, the present disclosure divides the units on the basis of considering logical functions, but there may be other slicing methods during actual implementations. For another example, a plurality of units or components may be combined or integrated into another system, or some features or functions in the units or components may be selectively disabled. In terms of a connection between different units or components, the connection discussed above in combination with drawings may be direct or indirect coupling between the units or components. In some circumstances, the aforementioned direct or indirect coupling relates to a communication connection using an interface, where the communication interface may support electrical, optical, acoustic, magnetic, or other forms of signal transmission.

In the present disclosure, units described as separate components may or may not be physically separated. Components shown as units may or may not be physical units. The aforementioned components or units may be located in the same position or distributed to a plurality of network units. Additionally, according to actual requirements, some or all of the units may be selected to achieve purposes of the solution described in embodiments of the present disclosure. Additionally, in some circumstances, the plurality of units in the embodiments of the present disclosure may be integrated into one unit, or each of the units may be physically separated.

In some other implementation circumstances, the aforementioned integrated unit may be implemented in the form of hardware. The hardware may be a specific hardware circuit, which may include a digital circuit and/or an analog circuit. A physical implementation of a hardware structure of the circuit may include but is not limited to a physical component, and the physical component may include but is not limited to a transistor, or a memristor, and the like. In view of this, various apparatuses described in the present disclosure (such as the computing apparatus or other processing apparatus) may be implemented by an appropriate hardware processor, such as a CPU (Central Processing Unit), a GPU (Graphics Processing Unit), an FPGA (Field Programmable Gate Array), a DSP (Digital Signal Processor), and an ASIC (Application Specific Integrated Circuit). Further, the aforementioned storage unit or storage apparatus may be any appropriate storage medium (including a magnetic storage medium or a magneto-optical storage medium, and the like), such as an RRAM (resistive random access memory), a DRAM, an SRAM (static random access memory), an EDRAM (enhanced dynamic random access memory), an HBM (high bandwidth memory), an HMC (hybrid memory cube), an ROM (Read-Only Memory), and an RAM, and the like.

The foregoing may be better understood according to following articles:

Article 1. A computing apparatus, configured to perform a convolution operation, where the computing apparatus comprises:

a storage circuit configured to store an input feature map and a convolutional kernel, where the convolutional kernel is stored in blocks according to a dimension of an output channel Co to be allocated to different slave processing circuits;

a master processing circuit configured to align an input channel Ci of the input feature map to an input channel slicing granularity Pci, form input feature data lines by combining data of each slicing granularity with Ws multiples of data in a width dimension, and broadcast the input feature data lines to a plurality of slave processing circuits to perform the convolution operation, where Pci*Ws=M, and M is the amount of data processed by hardware in a single operation; and

a plurality of slave processing circuits configured to perform convolution operations on the broadcasted input feature maps and corresponding convolutional kernels allocated to the slave processing circuits, respectively.

Article 2. The computing apparatus of Article 1, where the input channel slicing granularity Pci is determined according to a size of the input channel Ci of the input feature map and the M.

Article 3. The computing apparatus of Article 2, where the Pci is determined in a following manner:

aligning the size of the input channel Ci of the input feature map to a plurality of predetermined alternative slicing granularities, respectively; and

selecting an alternative slicing granularity with the padding amount within a predetermined range and the slicing granularity as large as possible as the Pci, according to the padding amount required for alignment to each alternative slicing granularity and a size of a corresponding slicing granularity, where the alternative slicing granularities are selected from $M/2^n$, n=0,1,2,$\cdots$.

Article 4. The computing apparatus of any one of Article 1-Article 3, where the storage circuit includes a first storage circuit, and the input feature map is stored in the first storage circuit in an original format.

Article 5. The computing apparatus of Article 4, where the storage circuit also includes a second storage circuit, and the convolutional kernels are stored in blocks in storage areas allocated to each slave processing circuit in the second storage circuit according to an output channel Co value, where each slave processing circuit is configured to process Aco/Ns convolutional kernels with different Co values at intervals of Ns, where Ns is the number of schedulable slave processing circuits, and Aco is an output channel alignment value.

Article 6. The computing apparatus of Article 5, where the output channel alignment value Aco is determined in a following manner:

when Ns*(m-1) <Co$\leq$Ns*m, and m=1,2,$\cdots$, Aco= Ns*m.

Article 7. The computing apparatus of Article 5 or Article 6, where each of the slave processing circuits includes a first caching circuit, a second caching circuit and a plurality of computing circuits, where

the first caching circuit is configured to cache a plurality of input feature data lines from the first storage circuit that are transmitted by broadcasting;

the second caching circuit is configured to cache a plurality of extended weight data lines of the convolutional kernels from the second storage circuit that are distributed to the slave processing circuits; and

each computing circuit is configured to perform an element-wise multiply-accumulate operation on input feature data lines selected from the first caching circuit and extended weight data lines selected from the second caching circuit respectively in each operation.

Article 8. The computing apparatus of Article 7, where the master processing circuit is further configured to:
read, when the Ci is less than or equal to the Pci, continuous input feature map data with a size of Ci*Ws from the first storage circuit, selectively perform alignment padding processing on the selected input feature map data to obtain a data line, and then broadcast the data line to the plurality of slave processing circuits, so as to continuously write the data line into the first caching circuit of the slave processing circuit.

Article 9. The computing apparatus of Article 7, where the master processing circuit is further configured to:
read, when the Ci is greater than the Pci, Ws spaced-apart input feature map data blocks from the first storage circuit, selectively perform alignment padding on the selected input feature map data blocks to obtain a data line, and then broadcast the data line to the plurality of slave processing circuits, so as to continuously write the data line into the first caching circuit of the slave processing circuit, where each input feature map data block is sliced according to the Pci or aligned to the Pci in the Ci dimension, and starting addresses of the various read input feature map data blocks are successively spaced by Ci.

Article 10. The computing apparatus of Article 7, further including a first intermediate storage circuit, where the master processing circuit is further configured to:

read, when the Ci is greater than the Pci, continuous input feature map data with a size of Ci*Ws from the first storage circuit and continuously write the read input feature map data into the first intermediate storage circuit; and

read Ws spaced-apart input feature map data blocks from the first intermediate storage circuit, selectively perform alignment padding on the selected input feature map data blocks to obtain a data line, and then broadcast the data line to the plurality of slave processing circuits, so as to continuously write the data line into the first caching circuit of the slave processing circuit, where each input feature map data block is sliced according to the Pci or aligned to the Pci in the Ci dimension, and starting addresses of the various read input feature map data blocks are successively spaced by Ci.

Article 11. The computing apparatus of any one of Article 7-Article 10, where
when the convolutional kernels in the second storage circuit are distributed to second caching circuits of the slave processing circuits, the input channel dimension of the convolutional kernels is aligned to the Pci; and a column of input channel data blocks sliced according to the Pci or aligned to the Pci in the Ci dimension is copied and extended into Ws columns according to the multiple Ws of the width dimension to form an extended weight data line for transmission to a second caching circuit of a corresponding slave processing circuit.

Article 12. The computing apparatus of Article 11, where each of the slave processing circuits is further configured to perform the convolution operation in a multi-layer loop in a dimension order, where

an innermost loop is determined by a Co value allocated to each slave processing circuit, and an innermost loop number Nco=Aco/Ns;

a middle loop is determined by a Kw dimension of the convolutional kernel, and a middle loop number Nkw=min(Kw, Kmax), where Kw is a size of the width dimension of the convolutional kernel, and Kmax is a maximum width value of the convolutional kernel supported by the slave processing circuits;

an outer loop is determined by a Kh dimension of the convolutional kernel and the number of blocks Bci that are sliced according to the Pci in the Ci dimension, and an outer loop number Nkh=Kh and Nci=Bci= ceil(Ci/Pci), where Kh is a size of a height dimension of the convolutional kernel; and

a total loop number Nloop=Nco*Nkw*Nkh*Nci.

Article 13. The computing apparatus of Article 12, where in the outer loop,

looping in the Kh dimension is performed first, followed by looping according to the number of blocks in the Ci dimension; or

looping according to the number of blocks in the Ci dimension is performed first, followed by looping in the Kh dimension.

Article 14. The computing apparatus of Article 12 or Article 13, where for each Co value in the innermost loop, each of the slave processing circuits is configured to:

utilize Ncu schedulable computing circuits of the slave processing circuits to perform parallel computations to obtain Ncu consecutive output blocks in a width Wo dimension of an output feature map, with each output block including Ws consecutive output points in the width Wo dimension.

Article 15. The computing apparatus of Article 14, where each of the slave processing circuits is configured to:

select Ncu adjacent input feature data lines from the first caching circuit and distribute the input feature data lines to the Ncu computing circuits for computation;

select a corresponding extended weight data line from the second caching circuit and broadcast the extended weight data line to the Ncu computing circuits; and

perform, by the Ncu computing circuits, an element-wise multiply-accumulate operation on the distributed input feature data lines and the broadcast extended weight data line in units of 1/Ws data lines to obtain partial sums of Ws output points.

Article 16. The computing apparatus of any one of Article 12-Article 15, where in the innermost loop, each input feature data line is reused Aco/Ns times to compute Ws output points in the same width Wo dimension of Aco/Ns Co values on the output feature map.

Article 17. The computing apparatus of any one of Article 12-Article 15, where in the middle loop along the Kw dimension, input feature data lines and an extended weight data line are selected from the first caching circuit and the second caching circuit by sliding synchronously in the width dimension with 1 stride.

Article 18. The computing apparatus of any one of Article 12-Article 17, where the Kmax, the maximum width value of the convolutional kernel supported by the slave processing circuits is determined in a following manner:

Kmax=L1*Ws-Ncu*Ws+1, where L1 is a size of the first caching circuit in units of data lines, and Ncu is the number of scheduled computing circuits.

Article 19. The computing apparatus of any one of Article 12-Article 18, further including a third caching circuit, where each of the slave processing circuits is further configured to:

store an operation result of each computing circuit in the third caching circuit in an order of the width Wo dimension first and then the Co dimension; and

output the operation result from the third caching circuit in an order of the Co dimension first and then the Wo dimension.

Article 20. The computing apparatus of Article 19, where the master processing circuit is further configured to:

splice and store the operation result output from each of the slave processing circuits according to a dimension storage order of HoWoCo.

Article 21. The computing apparatus of Article 20, where the master processing circuit is further configured to:

filter out output points that are redundantly computed in the Wo dimension due to an alignment operation when storing the operation results output from the slave processing circuits.

Article 22. The computing apparatus of Article 20 or Article 21, where the master processing circuit is further configured to:

filter out output points that are redundantly computed in the Co dimension due to an alignment operation when storing the operation results output from the slave processing circuits.

Article 23. The computing apparatus of Article 22, where the master processing circuit is further configured to:

slice the output channel Co dimension of the output feature map according to an output channel slicing granularity Pco, and combine data of each slicing granularity with data of Wso times the width dimension to constitute an output feature data line for transmission, where Pco*Wso=M.

Article 24. The computing apparatus of Article 23, where the master processing circuit is further configured to:

read Co*Wso of output feature map data from the output operation results when the Co is less than or equal to the Pco; and

continuously write the read output feature map data into the first storage circuit.

Article 25. The computing apparatus of Article 23, where the master processing circuit is further configured to:

slice the Co dimension into an integer part and a remainder part according to the Pco when the Co is greater than the Pco; and read output feature map data with a size of Pco*Wso from the output operation results each time for the integer part, where the output feature map data is sliced into Wso output feature map data blocks, and each output feature map data block includes data of size Pco in the Co dimension; and

write the Wso output feature map data blocks into the first storage circuit in an interleaved manner, where write starting addresses of written output feature map data blocks are successively spaced by Co.

Article 26. The computing apparatus of Article 25, where when the Co exceeds the Pco, the master processing circuit is further configured to:

read output feature map data with a size of Co_rem*Wso from the output operation results for the remainder part, where the output feature map data is sliced into Wso output feature map data blocks, and each output feature map data block includes data of size Co_rem in the Co dimension, where Co_rem represents a remainder obtained by dividing the Co by the Pco; and

write the Wso output feature map data blocks into the first storage circuit in the interleaved manner, where write starting addresses of the written output feature map data blocks are successively spaced by Co.

Article 27. A chip, including the computing apparatus of any one of Article 1-Article 26.

Article 28. A board card, including the chip of Article 27.

Article 29. A method using the computing apparatus of any one of Article 1-Article 26 to perform a convolution operation.

The embodiments of the present disclosure have been described in detail above. Specific embodiments have been used in the specification to explain the principles and implementation manners of the present disclosure. The descriptions of the above embodiments are only used to facilitate understanding of the methods and core ideas of the present disclosure. Persons of ordinary skill in the art may change the implementation and application scope according to the ideas of the present application. In summary, the content of this specification should not be construed as a limitation on the present disclosure.

## Claims

1. A computing apparatus, configured to perform a convolution operation, wherein the computing apparatus comprises:

a storage circuit configured to store an input feature map and a convolutional kernel, wherein the convolutional kernel is stored in blocks according to a dimension of an output channel Co to be allocated to different slave processing circuits;

a master processing circuit configured to align an input channel Ci of the input feature map to an input channel slicing granularity Pci, form input feature data lines by combining data of each slicing granularity with Ws multiples of data in a width dimension, and broadcast the input feature data lines to a plurality of slave processing circuits to perform the convolution operation, wherein Pci*Ws=M, and M is the amount of data processed by hardware in a single operation; and

a plurality of slave processing circuits configured to perform convolution operations on the broadcasted input feature maps and corresponding convolutional kernels allocated to the slave processing circuits, respectively.

2. The computing apparatus of claim 1, wherein the input channel slicing granularity Pci is determined according to a size of the input channel Ci of the input feature map and the M.

3. The computing apparatus of claim 2, wherein the Pci is determined in a following manner:

aligning the size of the input channel Ci of the input feature map to a plurality of predetermined alternative slicing granularities, respectively; and

selecting an alternative slicing granularity with the padding amount within a predetermined range and the slicing granularity as large as possible as the Pci, according to the padding amount required for alignment to each alternative slicing granularity and a size of a corresponding slicing granularity, wherein the alternative slicing granularities are selected from $M/2^n$, n=0,1,2,$\cdots$.

4. The computing apparatus of any one of claims 1-3, wherein the storage circuit comprises a first storage circuit, and the input feature map is stored in the first storage circuit in an original format.

5. The computing apparatus of claim 4, wherein the storage circuit also comprises a second storage circuit, and the convolutional kernels are stored in blocks in storage areas allocated to each slave processing circuit in the second storage circuit according to an output channel Co value, wherein each slave processing circuit is configured to process Aco/Ns convolutional kernels with different Co values at intervals of Ns, wherein Ns is the number of schedulable slave processing circuits, and Aco is an output channel alignment value.

6. The computing apparatus of claim 5, wherein the output channel alignment value Aco is determined in a following manner:
when $Ns*(m-1) <Co \leq Ns*m$, and $m=1,2,\cdots$, $Aco= Ns*m$.

7. The computing apparatus of claim 5 or claim 6, wherein each of the slave processing circuits comprises a first caching circuit, a second caching circuit and a plurality of computing circuits, wherein

the first caching circuit is configured to cache a plurality of input feature data lines from the first storage circuit that are transmitted by broadcasting;
the second caching circuit is configured to cache a plurality of extended weight data lines of the convolutional kernels from the second storage circuit that are distributed to the slave processing circuits; and
each computing circuit is configured to perform an element-wise multiply-accumulate operation on input feature data lines selected from the first caching circuit and extended weight data lines selected from the second caching circuit respectively in each operation.

8. The computing apparatus of claim 7, wherein the master processing circuit is further configured to:
read, when the Ci is less than or equal to the Pci, continuous input feature map data with a size of Ci*Ws from the first storage circuit, selectively perform alignment padding processing on the selected input feature map data to obtain a data line, and then broadcast the data line to the plurality of slave processing circuits, so as to continuously write the data line into the first caching circuit of the slave processing circuit.

9. The computing apparatus of claim 7, wherein the master processing circuit is further configured to:
read, when the Ci is greater than the Pci, Ws spaced-apart input feature map data blocks from the first storage circuit, selectively perform alignment padding on the selected input feature map data blocks to obtain a data line, and then broadcast the data line to the plurality of slave processing circuits, so as to continuously write the data line into the first caching circuit of the slave processing circuit, wherein each input feature map data block is sliced according to the Pci or aligned to the Pci in the Ci dimension, and starting addresses of the various read input feature map data blocks are successively spaced by Ci.

10. The computing apparatus of claim 7, further comprising a first intermediate storage circuit, wherein the master processing circuit is further configured to:

read, when the Ci is greater than the Pci, continuous input feature map data with a size of Ci*Ws from the first storage circuit and continuously write the read input feature map data into the first intermediate storage circuit; and
read Ws spaced-apart input feature map data blocks from the first intermediate storage circuit, selectively perform alignment padding on the selected input feature map data blocks to obtain a data line, and then broadcast the data line to the plurality of slave processing circuits, so as to continuously write the data line into the first caching circuit of the slave processing circuit, wherein each input feature map data block is sliced according to the Pci or aligned to the Pci in the Ci dimension, and starting addresses of the various read input feature map data blocks are successively spaced by Ci.

11. The computing apparatus of any one of claims 7-10, wherein
when the convolutional kernels in the second storage circuit are distributed to second caching circuits of the slave processing circuits, the input channel dimension of the convolutional kernels is aligned to the Pci; and a column of input channel data blocks sliced according to the Pci or aligned to the Pci in the Ci dimension is copied and extended into Ws columns according to the multiple Ws of the width dimension to form an extended weight data line for transmission to a second caching circuit of a corresponding slave processing circuit.

12. The computing apparatus of claim 11, wherein each of the slave processing circuits is further configured to perform the convolution operation in a multi-layer loop in a dimension order, wherein

an innermost loop is determined by a Co value allocated to each slave processing circuit, and an innermost loop number Nco=Aco/Ns;

a middle loop is determined by a Kw dimension of the convolutional kernel, and a middle loop number Nkw=min(Kw, Kmax), wherein Kw is a size of the width dimension of the convolutional kernel, and Kmax is a maximum width value of the convolutional kernel supported by the slave processing circuits;

an outer loop is determined by a Kh dimension of the convolutional kernel and the number of blocks Bci that are sliced according to the Pci in the Ci dimension, and an outer loop number Nkh=Kh and Nci=Bci=ceil(Ci/Pci), wherein Kh is a size of a height dimension of the convolutional kernel; and

a total loop number Nloop=Nco*Nkw*Nkh*Nci.

13. The computing apparatus of claim 12, wherein in the outer loop,

looping in the Kh dimension is performed first, followed by looping according to the number of blocks in the Ci dimension; or

looping according to the number of blocks in the Ci dimension is performed first, followed by looping in the Kh dimension.

14. The computing apparatus of claim 12 or claim 13, wherein for each Co value in the innermost loop, each of the slave processing circuits is configured to:
utilize Ncu schedulable computing circuits of the slave processing circuits to perform parallel computations to obtain Ncu consecutive output blocks in a width Wo dimension of an output feature map, with each output block comprising Ws consecutive output points in the width Wo dimension.

15. The computing apparatus of claim 14, wherein each of the slave processing circuits is configured to:

select Ncu adjacent input feature data lines from the first caching circuit and distribute the input feature data lines to the Ncu computing circuits for computation;

select a corresponding extended weight data line from the second caching circuit and broadcast the extended weight data line to the Ncu computing circuits; and

perform, by the Ncu computing circuits, an element-wise multiply-accumulate operation on the distributed input feature data lines and the broadcast extended weight data line in units of 1/Ws data lines to obtain partial sums of Ws output points.

16. The computing apparatus of any one of claims 12-15, wherein in the innermost loop, each input feature data line is reused Aco/Ns times to compute Ws output points in the same width Wo dimension of Aco/Ns Co values on the output feature map.

17. The computing apparatus of any one of claims 12-15, wherein in the middle loop along the Kw dimension, input feature data lines and an extended weight data line are selected from the first caching circuit and the second caching circuit by sliding synchronously in the width dimension with 1 stride.

18. The computing apparatus of any one of claims 12-17, wherein the Kmax, the maximum width value of the convolutional kernel supported by the slave processing circuits is determined in a following manner:
Kmax=L1*Ws*Ncu*Ws+1, wherein L1 is a size of the first caching circuit in units of data lines, and Ncu is the number of scheduled computing circuits.

19. The computing apparatus of any one of claims 12-18, further comprising a third caching circuit, wherein each of the slave processing circuits is further configured to:

store an operation result of each computing circuit in the third caching circuit in an order of the width Wo dimension first and then the Co dimension; and

output the operation result from the third caching circuit in an order of the Co dimension first and then the Wo dimension.

20. The computing apparatus of claim 19, wherein the master processing circuit is further configured to:
splice and store the operation result output from each of the slave processing circuits according to a dimension storage order of HoWoCo.

21. The computing apparatus of claim 20, wherein the master processing circuit is further configured to:
filter out output points that are redundantly computed in the Wo dimension due to an alignment operation when storing the operation results output from the slave processing circuits.

22. The computing apparatus of claim 20 or claim 21, wherein the master processing circuit is further configured to:
filter out output points that are redundantly computed in the Co dimension due to an alignment operation when storing the operation results output from the slave processing circuits.

23. The computing apparatus of claim 22, wherein the master processing circuit is further configured to:
slice the output channel Co dimension of the output feature map according to an output channel slicing granularity Pco, and combine data of each slicing granularity with data of Wso times the width dimension to constitute an output feature data line for transmission, wherein Pco*Wso=M.

24. The computing apparatus of claim 23, wherein the master processing circuit is further configured to:

read Co*Wso of output feature map data from the output operation results when the Co is less than or equal to the Pco; and
continuously write the read output feature map data into the first storage circuit.

25. The computing apparatus of claim 23, wherein the master processing circuit is further configured to:

slice the Co dimension into an integer part and a remainder part according to the Pco when the Co is greater than the Pco; and read output feature map data with a size of Pco*Wso from the output operation results each time for the integer part, wherein the output feature map data is sliced into Wso output feature map data blocks, and each output feature map data block comprises data of size Pco in the Co dimension; and
write the Wso output feature map data blocks into the first storage circuit in an interleaved manner, wherein write starting addresses of written output feature map data blocks are successively spaced by Co.

26. The computing apparatus of claim 25, wherein when the Co exceeds the Pco, the master processing circuit is further configured to:

read output feature map data with a size of Co_rem*Wso from the output operation results for the remainder part, wherein the output feature map data is sliced into Wso output feature map data blocks, and each output feature map data block comprises data of size Co_rem in the Co dimension, wherein Co_rem represents a remainder obtained by dividing the Co by the Pco; and
write the Wso output feature map data blocks into the first storage circuit in the interleaved manner, wherein write starting addresses of the written output feature map data blocks are successively spaced by Co.

27. A chip, comprising the computing apparatus of any one of claims 1-26.

28. A board card, comprising the chip of claim 27.

29. A method using the computing apparatus of any one of claims 1-26 to perform a convolution operation.

FIG. 1

FIG. 2

FIG. 3

FIG. 4

FIG. 5

FIG. 6a          FIG. 6b          FIG. 6c

FIG. 7a

FIG. 7b

FIG. 7c

EP 4 475 010 A1

FIG. 8

FIG. 9

FIG. 10a

FIG. 10b

FIG. 10c

FIG. 10d

FIG. 11

Ci=32B, Co=32

Kh
ci
Kw
32B*1

32B

Co=0

Copy

32B*2

32B

Co=16

Convolutional
kernel

Co
0
16
0
16
0
16
0
16

0
1
2
3
4
5
6
7
8

Second caching
circuit

Hi
Input feature map

Ci

Wi

Hi=0
Wi
First caching circuit

Ci

| 0 | 1 | 2 | 3 | 4 | 5 | 6 | 7 | 8 | 9 | 10 | 11 | 12 | 13 | 14 | 15 |

① CU0 CU1 CU2 CU3

| w0 | w1 | w2 | w3 | w4 | w5 | w6 | w7 | Co=0 |

②

| w0 | w1 | w2 | w3 | w4 | w5 | w6 | w7 | Co=16 |

Neuron is reused Co/16 times, Kw=0, Kh=0

FIG. 12

Ci=32B, Co=16

Kh
ci
Kw
32B*1

32B

Co=0

Convolutional
kernel

Copy

32B*2

Co
0
0
0
0
0
0
0
0
0

0
1
2
3
4
5
6
7
8

Second caching
circuit

Hi
Input feature map

Ci

Wi

Hi=0
Wi
First caching circuit

Ci

| 0 | 1 | 2 | 3 | 4 | 5 | 6 | 7 | 8 | 9 | 10 | 11 | 12 | 13 | 14 | 15 |

① CU0 CU1 CU2 CU3

| w0 | w1 | w2 | w3 | w4 | w5 | w6 | w7 | Co=0 |

Neuron is reused Co/16 times, Kw=0, Kh=0

FIG. 13

FIG. 14

FIG. 15

FIG. 16

## INTERNATIONAL SEARCH REPORT

| International application No. |
| --- |
| **PCT/CN2022/113318** |

**A. CLASSIFICATION OF SUBJECT MATTER**

G06F 17/15(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT; CNABS; EPTXT; USTXT; WOTXT; VEN; IEEE; CNKI: 卷积, 折叠, 拆分, 特征图, 主, 从, 宽度, 维度, 并行, convolution, fold, split, feature map, main, slave, width, dimension, parallel

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111860815 A (ZHONGKE CAMBRICON TECHNOLOGY CO., LTD.) 30 October 2020 (2020-10-30)<br>description, paragraphs 37-138, and claims 1-20 | 1-29 |
| Y | CN 111860771 A (SUZHOU INSPUR INTELLIGENT TECHNOLOGY CO., LTD.) 30 October 2020 (2020-10-30)<br>description, paragraphs 107-111 | 1-29 |
| Y | CN 109978157 A (ZHONGKE CAMBRICON TECHNOLOGY CO., LTD.) 05 July 2019 (2019-07-05)<br>description, paragraphs 56-166 | 1-29 |
| A | US 2018322606 A1 (INTEL CORP.) 08 November 2018 (2018-11-08)<br>entire document | 1-29 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **11 October 2022** | **25 October 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/113318** |

| Patent document cited in search report | | | Publication date (day/month/year) | Patent family member(s) | | | Publication date (day/month/year) |
| --- | --- | --- | --- | --- | --- | --- | --- |
| CN | 111860815 | A | 30 October 2020 | US | 2019065208 | A1 | 28 February 2019 |
| | | | | WO | 2019041251 | A1 | 07 March 2019 |
| | | | | CN | 109615061 | A | 12 April 2019 |
| CN | 111860771 | A | 30 October 2020 | None | | | |
| CN | 109978157 | A | 05 July 2019 | CN | 109978157 | B | 02 June 2020 |
| | | | | WO | 2019129070 | A1 | 04 July 2019 |
| | | | | US | 2020311531 | A1 | 01 October 2020 |
| US | 2018322606 | A1 | 08 November 2018 | US | 11373266 | B2 | 28 June 2022 |

Form PCT/ISA/210 (patent family annex) (January 2015)

## REFERENCES CITED IN THE DESCRIPTION

**Patent documents cited in the description**

- CN 202111400054